(19) Europäisches Patentamt
European Patent Office
Office européen des brevets

(11) EP 4 576 696 A1

(12) **EUROPEAN PATENT APPLICATION**
published in accordance with Art. 153(4) EPC

(43) Date of publication:
**25.06.2025 Bulletin 2025/26**

(21) Application number: **23876566.3**

(22) Date of filing: **28.09.2023**

(51) International Patent Classification (IPC):
***H04L 27/26*** *(2006.01)*

(52) Cooperative Patent Classification (CPC):
**H04L 27/00; H04L 27/26; H04W 56/00**

(86) International application number:
**PCT/CN2023/122688**

(87) International publication number:
**WO 2024/078363 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.10.2022 CN 202211230510**
**02.12.2022 CN 202211537885**

(71) Applicant: **Huawei Technologies Co., Ltd.**
**Shenzhen, Guangdong 518129 (CN)**

(72) Inventor: **LI, Qiang**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

# (54) SIGNAL TRANSMISSION METHOD AND APPARATUS

(57) This application provides a signal transmission method and an apparatus, and relates to the field of communication technologies. The method includes: generating a first signal, and sending the first signal to a receiving apparatus. The first signal includes data information and a first synchronization signal, the first synchronization signal includes at least two first modulation symbols, the data information includes at least two second modulation symbols, and duration of a symbol of the at least two first modulation symbols is shorter than duration of a symbol of the at least two second modulation symbols. **In** this solution, impact of noise and distortion of a radio channel can be reduced as much as possible, and accurate synchronization information can be obtained.

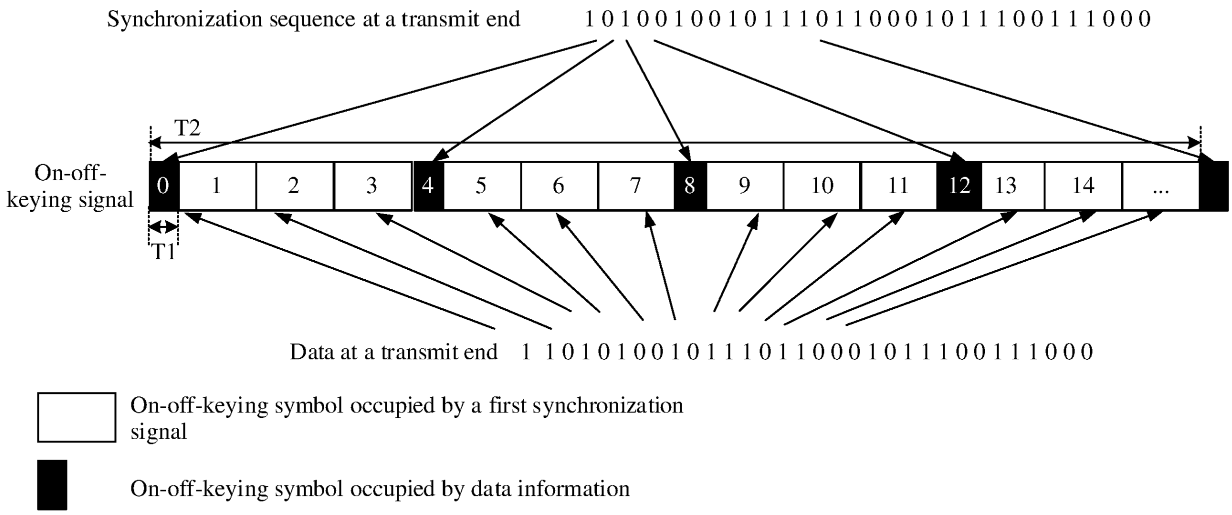


FIG. 5A



Processed by Luminess, 75001 PARIS (FR)

## Description

This application claims priority to Chinese Patent Application No. 202211230510.9, filed with the China National Intellectual Property Administration on October 9, 2022 and entitled "SIGNAL SENDING METHOD", which is incorporated herein by reference in its entirety.

This application claims priority to Chinese Patent Application No. 202211537885.X, filed with the China National Intellectual Property Administration on December 2, 2022 and entitled "SIGNAL TRANSMISSION METHOD AND APPARATUS", which is incorporated herein by reference in its entirety.

## TECHNICAL FIELD

This application relates to the field of communication technologies, and in particular, to a signal transmission method and an apparatus.

## BACKGROUND

Currently, to align time between a receive end and a transmit end, the transmit end and the receive end may perform related steps of time synchronization. In some solutions, the transmit end sends a signal to the receive end, where the signal carries a synchronization signal and data. After receiving the signal, the receive end performs a time domain correlation operation on the signal and a locally stored synchronization signal, to obtain time synchronization information.

Although synchronization effect can be achieved in a current solution, due to factors such as noise of a radio channel and channel distortion, obtained synchronization information in the current synchronization solution is inaccurate.

## SUMMARY

This application provides a signal transmission method and an apparatus, to reduce impact of noise and distortion of a radio channel as much as possible, and obtain accurate synchronization information.

To achieve the foregoing objectives, embodiments of this application provide the following technical solutions.

According to a first aspect, a signal transmission method is provided. The method may be applied to a sending apparatus, and the method includes: generating a first signal, and sending the first signal to a receiving apparatus. The first signal includes data information and a first synchronization signal, the first synchronization signal includes at least two first modulation symbols, the data information includes at least two second modulation symbols, and duration of a symbol of the at least two first modulation symbols is shorter than duration of a symbol of the at least two second modulation symbols.

In the foregoing solution, when the receiving apparatus performs time synchronization, a width of a correlation peak used to determine time synchronization information (which may also be referred to as timing information) is affected by a time width of a modulation symbol in the first synchronization signal. Therefore, when the sending apparatus generates the first synchronization signal, duration of the first modulation symbol in the first synchronization signal is shorter than duration of the second modulation symbol in the data information. In this way, when performing time domain correlation based on the first synchronization signal, the receiving apparatus can obtain the correlation peak with a narrower width, to determine the synchronization information within a narrower time range. This helps improve synchronization precision.

With reference to the first aspect, in a possible design, the method further includes:
sending first configuration information to the receiving apparatus.

The first configuration information includes at least one of the following information: indication information of first duration, sequence information of the first synchronization signal, and a sending periodicity of the first synchronization signal, where the indication information of the first duration indicates the duration of the symbol of the at least two first modulation symbols.

In this way, the receiving apparatus may generate, based on the first configuration information, the first local synchronization signal used for time synchronization, perform a correlation operation on the first local synchronization signal and the received first synchronization signal, to determine the correlation peak, and determine the synchronization information based on the correlation peak. Because the duration of the first modulation symbol in the first synchronization signal is short (shorter than the duration of the second modulation symbol in the data information), the receiving apparatus can obtain the narrower correlation peak through the correlation operation, to improve synchronization precision.

With reference to the first aspect, in a possible design, the method further includes:

generating a second signal, where the second signal includes a second synchronization signal and a third synchronization signal, the second synchronization signal includes at least two third modulation symbols, a time interval between adjacent symbols in the at least two third modulation symbols is a first time interval, the third synchronization signal includes at least two fourth modulation symbols, a time interval between adjacent symbols in the at least two fourth modulation symbols is the first time interval, there is first offset time between sending time of the second synchronization signal and sending time of the third synchronization signal, and duration of a symbol of the at least two fourth modulation symbols is shorter than duration of a symbol of the at least two third modulation symbols; and
sending the second signal.

That the second signal includes the second synchronization signal and the third synchronization signal may be understood as that the second signal carries the second synchronization signal and the third synchronization signal.

For example, as shown in FIG. 9A, an OOK signal (an example of the second signal) includes the second synchronization signal (shown as filled with slashes), the third synchronization signal (shown as filled with black), and the data information. The second synchronization signal includes an OOK symbol 5 and an OOK symbol 15. By analogy, the second synchronization signal may further include an OOK symbol such as an OOK symbol 25. It can be learned that a time interval between two adjacent symbols in the second synchronization signal (shown as filled with slashes) is T3 (the first time interval).

For example, as shown in FIG. 9A, the third synchronization signal includes an OOK symbol 0 and an OOK symbol 10. By analogy, the third synchronization signal may further include a symbol such as an OOK symbol 20. It can be learned that a time interval between two adjacent symbols in the third synchronization signal is the first time interval T3.

For example, as shown in FIG. 9A, there is first offset time T4 between sending time of the first modulation symbol in the second synchronization signal (occupying an OOK symbol filled with slashes) and sending time of the first modulation symbol in the third synchronization signal (occupying an OOK symbol filled with black). It can be learned that there is the first offset time T4 between the sending time of the second synchronization signal and the sending time of the third synchronization signal.

For example, still as shown in FIG. 9A, duration (T1) of the fourth modulation symbol in the third synchronization signal is shorter than duration (T1') of the third modulation symbol in the second synchronization signal.

In this way, the receiving apparatus may perform synchronization based on the second synchronization signal and the third synchronization signal. For example, as shown in FIG. 12 and FIG. 13, a receiving device may separately correlate a local synchronization signal 1 (an example of the third synchronization signal) and a local synchronization signal 2 (an example of the third synchronization signal) with a received OOK signal, to obtain corresponding correlation peaks. The receiving device may determine the synchronization information based on time of the corresponding correlation peaks obtained in FIG. 12 and FIG. 13, to determine a start location of the data information. The correlation peaks obtained in FIG. 12 and FIG. 13 may be classified into three types. A width of a first-type correlation peak is 2T1. A width of a second-type correlation peak is T1+T2 (duration of T1 is shorter than duration of T2). A width of a third-type correlation peak is 2T2. The width (2T1) of the first-type correlation peak is the narrowest, and the receiving device may obtain most accurate scheduled time at time at which the first-type correlation peak is located.

In the foregoing solution, duration of a modulation symbol in the second synchronization signal in the second signal is long. Therefore, signal energy of the second synchronization signal is high. Therefore, performing synchronization by using the second synchronization signal with high energy can improve a success probability of performing synchronization by the receiving apparatus. For example, in some communication scenarios in which a channel environment is poor, the receiving apparatus can also detect the second synchronization signal, and further perform time synchronization based on the second synchronization signal.

In addition, because duration of a modulation symbol in the third synchronization signal in the second signal is short, synchronization precision can be improved by using the third synchronization signal (the duration of the modulation symbol is short).

With reference to the first aspect, in a possible design, the method further includes:
sending second configuration information to the receiving apparatus.

The second configuration information includes at least one of the following information: the first time interval, the first offset time, sequence information of the second synchronization signal, sequence information of the third synchronization signal, indication information of second duration, indication information of third duration, a sending periodicity of the second synchronization signal, and a sending periodicity of the third synchronization signal.

The indication information of the second duration indicates the duration of the symbol of the at least two third modulation symbols, and the indication information of the third duration indicates the duration of the symbol the at least two fourth modulation symbols.

In this way, the receiving apparatus may generate the second local synchronization signal and the third local synchronization signal based on the second configuration information, and perform time synchronization based on the second local synchronization signal and the third local synchronization signal. Because duration of a modulation symbol in the second synchronization signal is long, the second synchronization signal has high energy, and can resist distortion and noise of a channel environment, thereby increasing a probability that the second synchronization signal is received by a receive end. In addition, because duration of a modulation symbol in the third synchronization signal is short, the receiving apparatus may obtain a narrower correlation peak based on the third synchronization signal, thereby improving synchronization precision.

With reference to the first aspect, in a possible design, the method further includes:

generating a second signal, where the second signal includes a second synchronization signal and a third synchronization signal, the second synchronization signal occupies, in time domain, a last first-type symbol corresponding to at least one second-type symbol, the third synchronization signal occupies, in time domain, a cyclic prefix CP corresponding to the at least one second-type symbol, and a signal in the CP is obtained by copying a signal of the last first-type symbol in the second-type symbol corresponding to the CP; and
sending the second signal.

For example, as shown in FIG. 9B, the sending device generates an OOK signal through an OFDM transmitter. The transmitter generates four OOK symbols in each OFDM symbol. According to a working mechanism of the OFDM transmitter, a signal at a tail part of each OFDM symbol is copied to a head end of the OFDM symbol. For example, as shown in FIG. 9B, the transmitter copies a synchronization signal at a tail part (that is, an OOK symbol 4) of an OFDM symbol 1 to a head end of the OFDM symbol 1 (that is, a location filled with black before an OOK symbol 1 in FIG. 9B), and copies a synchronization signal at a tail part (that is, an OOK symbol 12) of an OFDM symbol 3 to a head end of the OFDM symbol 3 (that is, a location filled with black before an OOK symbol 9 in FIG. 9B).

For another example, as shown in FIG. 10, the sending device sends the third synchronization signal in CPs corresponding to OFDM symbols 1, 3, 4, and 5, and sends the second synchronization signal in a last OOK symbol corresponding to the OFDM symbols 1, 3, 4, and 5. It can be learned that the second synchronization signal occupies, in time domain, the last OOK symbol corresponding to each of at least one OFDM symbol (the OFDM symbols 1, 3, 4, and 5). The third synchronization signal occupies, in time domain, a CP corresponding to each of the at least one OFDM symbol (CPs corresponding to the OFDM symbols 1, 3, 4, and 5).

In this way, the second signal may include the second synchronization signal and the third modulation symbol. The receiving apparatus may perform time synchronization by using the two synchronization signals, to improve time synchronization precision.

With reference to the first aspect, in a possible design, duration of the first-type symbol is longer than or equal to duration of the CP.

In this way, the second signal may include the second synchronization signal with the longer modulation symbol and the third modulation symbol with the shorter modulation symbol. Because duration of a modulation symbol in the second synchronization signal is long, the second synchronization signal has high energy, and can resist distortion and noise of a channel environment, thereby increasing a probability that the second synchronization signal is received by a receive end. In addition, because duration of a modulation symbol in the third synchronization signal is short, the receive end may obtain a narrower correlation peak based on the third synchronization signal, thereby improving synchronization precision.

With reference to the first aspect, in a possible design, the method further includes:
sending third configuration information to the receiving apparatus.

The third configuration information includes at least one of the following information: a second-type symbol occupied by the second synchronization signal, a second-type symbol occupied by the third synchronization signal, a sending time interval between adjacent modulation symbols in the second synchronization signal, a sending time interval between adjacent modulation symbols in the third synchronization signal, offset time between sending time of the second synchronization signal and sending time of the third synchronization signal, sequence information of the second synchronization signal, sequence information of the third synchronization signal, a sending periodicity of the second synchronization signal, and a sending periodicity of the third synchronization signal.

With reference to the first aspect, in a possible design, the generating a second signal includes:
generating the second signal through an orthogonal frequency division multiplexing OFDM transmitter.

In this solution, the existing OFDM transmitter in the sending apparatus may be used to generate and send the second signal, and hardware of the sending apparatus does not need to be upgraded, so that costs can be reduced.

With reference to the first aspect, in a possible design, the first-type symbol includes at least one of the following symbols: an on-off-keying OOK symbol, an amplitude shift keying ASK symbol, and a frequency shift keying FSK symbol, and the second-type symbol includes an OFDM symbol.

According to a second aspect, a signal transmission method is provided, and is applied to a receiving apparatus. The method includes:

receiving a first signal from a sending apparatus, where the first signal includes data information and a first synchronization signal, the first synchronization signal includes at least two first modulation symbols, the data information includes at least two second modulation symbols, and duration of a symbol of the at least two first modulation symbols is shorter than duration of a symbol of the at least two second modulation symbols; and
performing time synchronization based on the first synchronization signal.

With reference to the second aspect, in a possible design, the method further includes:

obtaining first configuration information, where the first configuration information includes at least one of the following information: indication information of first duration, sequence information of the first synchronization signal, a sending periodicity of the first synchronization signal, and the indication information of the first duration indicates the duration of the symbol of the at least two first modulation symbols; and

generating a first local synchronization signal based on the first configuration information, where the first local synchronization signal is used for time synchronization.

For example, as shown in FIG. 7, the receive end may generate a local synchronization signal 3 based on the first configuration information. A waveform of the local synchronization signal 3 is consistent with a waveform of the first synchronization signal.

With reference to the second aspect, in a possible design, the first configuration information is preconfigured, or the first configuration information is configured by the sending apparatus.

With reference to the second aspect, in a possible design, the performing time synchronization based on the first synchronization signal includes:
performing time synchronization based on the first local synchronization signal and the first synchronization signal.

With reference to the second aspect, in a possible design, the method further includes:

receiving a second signal, where the second signal includes a second synchronization signal and a third synchronization signal, the second synchronization signal includes at least two third modulation symbols, a time interval between adjacent symbols in the at least two third modulation symbols is a first time interval, the third synchronization signal includes at least two fourth modulation symbols, a time interval between adjacent symbols in the at least two fourth modulation symbols is the first time interval, there is first offset time between sending time of the second synchronization signal and sending time of the third synchronization signal, and duration of a symbol of the at least two fourth modulation symbols is shorter than duration of a symbol of the at least two third modulation symbols; and

performing time synchronization based on the second synchronization signal and the third synchronization signal.

With reference to the second aspect, in a possible design, the method further includes:

receiving second configuration information from the sending apparatus, where the second configuration information includes at least one of the following information: the first time interval, the first offset time, sequence information of the second synchronization signal, sequence information of the third synchronization signal, indication information of second duration, indication information of third duration, a sending periodicity of the second synchronization signal, and a sending periodicity of the third synchronization signal; the indication information of the second duration indicates the duration of the symbol of the at least two third modulation symbols, and the indication information of the third duration indicates the duration of the symbol the at least two fourth modulation symbols; and

generating a second local synchronization signal and a third local synchronization signal based on the second configuration information.

With reference to the second aspect, in a possible design, the method further includes:

receiving a second signal, where the second signal includes a second synchronization signal and a third synchronization signal, the second synchronization signal occupies, in time domain, a last first-type symbol corresponding to at least one second-type symbol, the third synchronization signal occupies, in time domain, a cyclic prefix CP corresponding to the at least one second-type symbol, and a signal in the CP is obtained by copying a signal of the last first-type symbol in the second-type symbol corresponding to the CP; and

performing time synchronization based on the second synchronization signal and the third synchronization signal.

With reference to the second aspect, in a possible design, the method further includes:

receiving third configuration information from the sending apparatus, where the third configuration information includes at least one of the following information: a second-type symbol occupied by the second synchronization signal, a second-type symbol occupied by the third synchronization signal, a sending time interval between adjacent modulation symbols in the second synchronization signal, a sending time interval between adjacent modulation symbols in the third synchronization signal, offset time between sending time of the second synchronization signal and sending time of the third synchronization signal, sequence information of the second synchronization signal, sequence information of the third synchronization signal, a sending periodicity of the second synchronization signal, and a sending periodicity of the third synchronization signal; and

generating a second local synchronization signal and a third local synchronization signal based on the third configuration information.

With reference to the second aspect, in a possible design, duration of the first-type symbol is longer than duration of the CP.

With reference to the second aspect, in a possible design, the performing time synchronization based on the second synchronization signal and the third synchronization signal includes:
determining, based on the second local synchronization signal, the second synchronization signal, and the third synchronization signal, first scheduled time corresponding to the second synchronization signal and second scheduled time corresponding to the third synchronization signal.

For example, as shown in FIG. 13, the receiving apparatus correlates a local synchronization signal 1 (an example of the second local synchronization signal) with the second synchronization signal and the third synchronization signal, to obtain a second-type correlation peak and a third-type correlation peak, determines second scheduled time based on the second-type correlation peak (a correlation peak corresponding to the third synchronization signal), and determines first scheduled time based on the third-type correlation peak.

With reference to the second aspect, in a possible design, the performing time synchronization based on the second synchronization signal and the third synchronization signal includes:
determining, based on the third local synchronization signal, the second synchronization signal, and the third synchronization signal, third scheduled time corresponding to the second synchronization signal and fourth scheduled time corresponding to the third synchronization signal, where the third scheduled time corresponds to a first correlation peak, the fourth scheduled time corresponds to a second correlation peak, and a time domain width of the first correlation peak is greater than a time domain width of the second correlation peak.

For example, as shown in FIG. 12, the receiving apparatus correlates a local synchronization signal 2 (an example of the third local synchronization signal) with the second synchronization signal and the third synchronization signal, to obtain the second-type correlation peak and a first-type correlation peak, determines fourth scheduled time based on the first-type correlation peak (the correlation peak corresponding to the third synchronization signal), and determines third scheduled time based on the second-type correlation peak (the correlation peak corresponding to the second synchronization signal). A time domain width (2T1) of the first-type correlation peak is less than a time domain width (T1+T2) of the second-type correlation peak.

According to a third aspect, a signal transmission method is provided, and is applied to a sending apparatus. The method includes:

generating a second signal, where the second signal includes a second synchronization signal and a third synchronization signal, the second synchronization signal includes at least two third modulation symbols, a time interval between adjacent symbols in the at least two third modulation symbols is a first time interval, the third synchronization signal includes at least two fourth modulation symbols, a time interval between adjacent symbols in the at least two fourth modulation symbols is the first time interval, there is first offset time between sending time of the second synchronization signal and sending time of the third synchronization signal, and duration of a symbol of the at least two fourth modulation symbols is shorter than duration of a symbol of the at least two third modulation symbols; and
sending the second signal.

In a possible design, the method further includes:
sending second configuration information to the receiving apparatus.

The second configuration information includes at least one of the following information: the first time interval, the first offset time, sequence information of the second synchronization signal, sequence information of the third synchronization signal, indication information of second duration, indication information of third duration, a sending periodicity of the second synchronization signal, and a sending periodicity of the third synchronization signal.

The indication information of the second duration indicates the duration of the symbol of the at least two third modulation symbols, and the indication information of the third duration indicates the duration of the symbol the at least two fourth modulation symbols.

According to a fourth aspect, a signal transmission method is provided, and is applied to a receiving apparatus. The method includes:

receiving a second signal, where the second signal includes a second synchronization signal and a third synchronization signal, the second synchronization signal includes at least two third modulation symbols, a time interval between adjacent symbols in the at least two third modulation symbols is a first time interval, the third synchronization signal includes at least two fourth modulation symbols, a time interval between adjacent symbols in the at least two fourth modulation symbols is the first time interval, there is first offset time between sending time of the second synchronization signal and sending time of the third synchronization signal, and duration of a symbol of the at least two fourth modulation symbols is shorter than duration of a symbol of the at least two third modulation symbols; and
performing time synchronization based on the second signal.

In a possible design, the method further includes:

receiving second configuration information; and

The second configuration information includes at least one of the following information: the first time interval, the first offset time, sequence information of the second synchronization signal, sequence information of the third synchronization signal, indication information of second duration, indication information of third duration, a sending periodicity of the second synchronization signal, and a sending periodicity of the third synchronization signal.

The indication information of the second duration indicates the duration of the symbol of the at least two third modulation symbols, and the indication information of the third duration indicates the duration of the symbol the at least two fourth modulation symbols.

According to a fifth aspect, a signal transmission method is provided, and is applied to a sending apparatus. The method includes:

generating a second signal, where the second signal includes a second synchronization signal and a third synchronization signal, the second synchronization signal occupies, in time domain, a last first-type symbol corresponding to at least one second-type symbol, the third synchronization signal occupies, in time domain, a cyclic prefix CP corresponding to the at least one second-type symbol, and a signal in the CP is obtained by copying a signal of the last first-type symbol in the second-type symbol corresponding to the CP; and

sending the second signal.

In a possible design, duration of the first-type symbol is longer than or equal to duration of the CP.

In a possible design, the method further includes:

sending third configuration information to a receiving apparatus.

The third configuration information includes at least one of the following information: a second-type symbol occupied by the second synchronization signal, a second-type symbol occupied by the third synchronization signal, a sending time interval between adjacent modulation symbols in the second synchronization signal, a sending time interval between adjacent modulation symbols in the third synchronization signal, offset time between sending time of the second synchronization signal and sending time of the third synchronization signal, sequence information of the second synchronization signal, sequence information of the third synchronization signal, a sending periodicity of the second synchronization signal, and a sending periodicity of the third synchronization signal.

According to a sixth aspect, a signal transmission method is provided, and is applied to a receiving apparatus. The method includes:

receiving a second signal, where the second signal includes a second synchronization signal and a third synchronization signal, the second synchronization signal occupies, in time domain, a last first-type symbol corresponding to at least one second-type symbol, the third synchronization signal occupies, in time domain, a cyclic prefix CP corresponding to the at least one second-type symbol, and a signal in the CP is obtained by copying a signal of the last first-type symbol in the second-type symbol corresponding to the CP; and

performing time synchronization based on the second signal.

In a possible design, duration of the first-type symbol is longer than or equal to duration of the CP.

In a possible design, the method further includes:

receiving third configuration information.

The third configuration information includes at least one of the following information: a second-type symbol occupied by the second synchronization signal, a second-type symbol occupied by the third synchronization signal, a sending time interval between adjacent modulation symbols in the second synchronization signal, a sending time interval between adjacent modulation symbols in the third synchronization signal, offset time between sending time of the second synchronization signal and sending time of the third synchronization signal, sequence information of the second synchronization signal, sequence information of the third synchronization signal, a sending periodicity of the second synchronization signal, and a sending periodicity of the third synchronization signal.

According to a seventh aspect, a signal transmission apparatus is provided, and is used in a sending apparatus. The signal transmission apparatus includes:

a processing module, configured to generate a first signal, where the first signal includes data information and a first synchronization signal, the first synchronization signal includes at least two first modulation symbols, the data information includes at least two second modulation symbols, and duration of a symbol of the at least two first modulation symbols is shorter than duration of a symbol of the at least two second modulation symbols; and

a communication module, configured to send the first signal to a receiving apparatus.

In a possible design, the communication module is further configured to send first configuration information to the receiving apparatus.

The first configuration information includes at least one of the following information: indication information of first duration, sequence information of the first synchronization signal, and a sending periodicity of the first synchronization signal, where the indication information of the first duration indicates the duration of the symbol of the at least two first modulation symbols.

In a possible design, the processing module is further configured to generate a second signal, where the second signal includes a second synchronization signal and a third synchronization signal, the second synchronization signal includes at least two third modulation symbols, a time interval between adjacent symbols in the at least two third modulation symbols is a first time interval, the third synchronization signal includes at least two fourth modulation symbols, a time interval between adjacent symbols in the at least two fourth modulation symbols is the first time interval, there is first offset time between sending time of the second synchronization signal and sending time of the third synchronization signal, and duration of a symbol of the at least two fourth modulation symbols is shorter than duration of a symbol of the at least two third modulation symbols; and
the communication module is further configured to send the second signal.

In a possible design, the communication module is further configured to send second configuration information to the receiving apparatus.

The second configuration information includes at least one of the following information: the first time interval, the first offset time, sequence information of the second synchronization signal, sequence information of the third synchronization signal, indication information of second duration, indication information of third duration, a sending periodicity of the second synchronization signal, and a sending periodicity of the third synchronization signal.

The indication information of the second duration indicates the duration of the symbol of the at least two third modulation symbols, and the indication information of the third duration indicates the duration of the symbol the at least two fourth modulation symbols.

In a possible design, the processing module is further configured to generate a second signal, where the second signal includes a second synchronization signal and a third synchronization signal, the second synchronization signal occupies, in time domain, a last first-type symbol corresponding to at least one second-type symbol, the third synchronization signal occupies, in time domain, a cyclic prefix CP corresponding to the at least one second-type symbol, and a signal in the CP is obtained by copying a signal of the last first-type symbol in the second-type symbol corresponding to the CP; and
the communication module is further configured to send the second signal.

In a possible design, duration of the first-type symbol is longer than or equal to duration of the CP.

In a possible design, the communication module is further configured to send third configuration information to the receiving apparatus.

The third configuration information includes at least one of the following information: a second-type symbol occupied by the second synchronization signal, a second-type symbol occupied by the third synchronization signal, a sending time interval between adjacent modulation symbols in the second synchronization signal, a sending time interval between adjacent modulation symbols in the third synchronization signal, offset time between sending time of the second synchronization signal and sending time of the third synchronization signal, sequence information of the second synchronization signal, sequence information of the third synchronization signal, a sending periodicity of the second synchronization signal, and a sending periodicity of the third synchronization signal.

In a possible design, the generating a second signal includes:
generating the second signal through an orthogonal frequency division multiplexing OFDM transmitter.

In a possible design, the first-type symbol includes at least one of the following symbols: an on-off-keying OOK symbol, an amplitude shift keying ASK symbol, and a frequency shift keying FSK symbol, and the second-type symbol includes an OFDM symbol.

According to an eighth aspect, a signal transmission apparatus is provided, and is used in a receiving apparatus. The signal transmission apparatus includes:

a communication module, configured to receive a first signal from a sending apparatus, where the first signal includes data information and a first synchronization signal, the first synchronization signal includes at least two first modulation symbols, the data information includes at least two second modulation symbols, and duration of a symbol of the at least two first modulation symbols is shorter than duration of a symbol of the at least two second modulation symbols; and

a processing module, configured to perform time synchronization based on the first synchronization signal.

In a possible design, the processing module is further configured to:

obtain first configuration information, where the first configuration information includes at least one of the following information: indication information of first duration, sequence information of the first synchronization signal, a sending periodicity of the first synchronization signal, and the indication information of the first duration indicates the duration of the symbol of the at least two first modulation symbols; and

generate a first local synchronization signal based on the first configuration information, where the first local synchronization signal is used for time synchronization.

In a possible design, the first configuration information is preconfigured, or the first configuration information is configured by the sending apparatus.

In a possible design, the performing time synchronization based on the first synchronization signal includes:

Performing time synchronization based on the first local synchronization signal and the first synchronization signal.

In a possible design, the communication module is further configured to receive a second signal, where the second signal includes a second synchronization signal and a third synchronization signal, the second synchronization signal includes at least two third modulation symbols, a time interval between adjacent symbols in the at least two third modulation symbols is a first time interval, the third synchronization signal includes at least two fourth modulation symbols, a time interval between adjacent symbols in the at least two fourth modulation symbols is the first time interval, there is first offset time between sending time of the second synchronization signal and sending time of the third synchronization signal, and duration of a symbol of the at least two fourth modulation symbols is shorter than duration of a symbol of the at least two third modulation symbols; and the processing module is further configured to perform time synchronization based on the second synchronization signal and the third synchronization signal.

In a possible design, the communication module is further configured to receive second configuration information from the sending apparatus, where the second configuration information includes at least one of the following information: the first time interval, the first offset time, sequence information of the second synchronization signal, sequence information of the third synchronization signal, indication information of second duration, indication information of third duration, a sending periodicity of the second synchronization signal, and a sending periodicity of the third synchronization signal; the indication information of the second duration indicates the duration of the symbol of the at least two third modulation symbols, and the indication information of the third duration indicates the duration of the symbol the at least two fourth modulation symbols; and

the processing module is further configured to generate a second local synchronization signal and a third local synchronization signal based on the second configuration information.

In a possible design, the communication module is further configured to receive a second signal, where the second signal includes a second synchronization signal and a third synchronization signal, the second synchronization signal occupies, in time domain, a last first-type symbol corresponding to at least one second-type symbol, the third synchronization signal occupies, in time domain, a cyclic prefix CP corresponding to the at least one second-type symbol, and a signal in the CP is obtained by copying a signal of the last first-type symbol in the second-type symbol corresponding to the CP; and the processing module is further configured to perform time synchronization based on the second synchronization signal and the third synchronization signal.

In a possible design, the communication module is further configured to receive third configuration information from the sending apparatus, where the third configuration information includes at least one of the following information: a second-type symbol occupied by the second synchronization signal, a second-type symbol occupied by the third synchronization signal, a sending time interval between adjacent modulation symbols in the second synchronization signal, a sending time interval between adjacent modulation symbols in the third synchronization signal, offset time between sending time of the second synchronization signal and sending time of the third synchronization signal, sequence information of the second synchronization signal, sequence information of the third synchronization signal, a sending periodicity of the second synchronization signal, and a sending periodicity of the third synchronization signal; and

the processing module is further configured to generate a second local synchronization signal and a third local synchronization signal based on the third configuration information.

In a possible design, duration of the first-type symbol is longer than duration of the CP.

In a possible design, the performing time synchronization based on the second synchronization signal and the third synchronization signal includes:

determining, based on the second local synchronization signal, the second synchronization signal, and the third synchronization signal, first scheduled time corresponding to the second synchronization signal and second scheduled time corresponding to the third synchronization signal.

**In** a possible design, the performing time synchronization based on the second synchronization signal and the third synchronization signal includes:

determining, based on the third local synchronization signal, the second synchronization signal, and the third synchronization signal, third scheduled time corresponding to the second synchronization signal and fourth scheduled time corresponding to the third synchronization signal, where the third scheduled time corresponds to a first correlation peak, the fourth scheduled time corresponds to a second correlation peak, and a time domain width of the first correlation peak is greater than a time domain width of the second correlation peak.

According to a ninth aspect, a signal transmission apparatus is provided, and is used in a sending apparatus. The signal transmission apparatus includes:

a processing module, configured to receive a second signal, where the second signal includes a second synchronization signal and a third synchronization signal, the second synchronization signal includes at least two third modulation symbols, a time interval between adjacent symbols in the at least two third modulation symbols is a first time interval, the third synchronization signal includes at least two fourth modulation symbols, a time interval between adjacent symbols in the at least two fourth modulation symbols is the first time interval, there is first offset time between sending time of the second synchronization signal and sending time of the third synchronization signal, and duration of a symbol of the at least two fourth modulation symbols is shorter than duration of a symbol of the at least two third modulation symbols; and

a communication module, configured to send the second signal.

**In** a possible design, the communication module is further configured to send second configuration information to the receiving apparatus.

The second configuration information includes at least one of the following information: the first time interval, the first offset time, sequence information of the second synchronization signal, sequence information of the third synchronization signal, indication information of second duration, indication information of third duration, a sending periodicity of the second synchronization signal, and a sending periodicity of the third synchronization signal.

The indication information of the second duration indicates the duration of the symbol of the at least two third modulation symbols, and the indication information of the third duration indicates the duration of the symbol the at least two fourth modulation symbols.

According to a tenth aspect, a signal transmission apparatus is provided, and is used in a receiving apparatus. The signal transmission apparatus includes:

a communication module, configured to receive a second signal, where the second signal includes a second synchronization signal and a third synchronization signal, the second synchronization signal includes at least two third modulation symbols, a time interval between adjacent symbols in the at least two third modulation symbols is a first time interval, the third synchronization signal includes at least two fourth modulation symbols, a time interval between adjacent symbols in the at least two fourth modulation symbols is the first time interval, there is first offset time between sending time of the second synchronization signal and sending time of the third synchronization signal, and duration of a symbol of the at least two fourth modulation symbols is shorter than duration of a symbol of the at least two third modulation symbols; and

a processing module, configured to perform time synchronization based on the second signal.

In a possible design, the communication module is further configured to receive second configuration information.

The second configuration information includes at least one of the following information: the first time interval, the first offset time, sequence information of the second synchronization signal, sequence information of the third synchronization signal, indication information of second duration, indication information of third duration, a sending periodicity of the second synchronization signal, and a sending periodicity of the third synchronization signal.

The indication information of the second duration indicates the duration of the symbol of the at least two third modulation symbols, and the indication information of the third duration indicates the duration of the symbol the at least two fourth modulation symbols.

According to an eleventh aspect, a signal transmission apparatus is provided, and is used in a sending apparatus. The signal transmission apparatus includes:

a processing module, configured to generate a second signal, where the second signal includes a second synchronization signal and a third synchronization signal, the second synchronization signal occupies, in time domain, a last first-type symbol corresponding to at least one second-type symbol, the third synchronization signal occupies, in time domain, a cyclic prefix CP corresponding to the at least one second-type symbol, and a signal in the CP is obtained by copying a signal of the last first-type symbol in the second-type symbol corresponding to the CP; and

a communication module, configured to send the second signal.

In a possible design, duration of the first-type symbol is longer than or equal to duration of the CP.

In a possible design, the communication module is further configured to send third configuration information to the receiving apparatus.

The third configuration information includes at least one of the following information: a second-type symbol occupied by the second synchronization signal, a second-type symbol occupied by the third synchronization signal, a sending time interval between adjacent modulation symbols in the second synchronization signal, a sending time interval between adjacent modulation symbols in the third synchronization signal, offset time between sending time of the second synchronization signal and sending time of the third synchronization signal, sequence information of the second synchronization signal, sequence information of the third synchronization signal, a sending periodicity of the second synchronization signal, and a sending periodicity of the third synchronization signal.

According to a twelfth aspect, a signal transmission apparatus is provided, and is used in a receiving apparatus. The signal transmission apparatus includes:

a communication module, configured to receive a second signal, where the second signal includes a second synchronization signal and a third synchronization signal, the second synchronization signal occupies, in time domain, a last first-type symbol corresponding to at least one second-type symbol, the third synchronization signal occupies, in time domain, a cyclic prefix CP corresponding to the at least one second-type symbol, and a signal in the CP is obtained by copying a signal of the last first-type symbol in the second-type symbol corresponding to the CP; and

a processing module, configured to perform time synchronization based on the second signal.

In a possible design, duration of the first-type symbol is longer than or equal to duration of the CP.

In a possible design, the communication module is further configured to receive third configuration information.

The third configuration information includes at least one of the following information: a second-type symbol occupied by the second synchronization signal, a second-type symbol occupied by the third synchronization signal, a sending time interval between adjacent modulation symbols in the second synchronization signal, a sending time interval between adjacent modulation symbols in the third synchronization signal, offset time between sending time of the second synchronization signal and sending time of the third synchronization signal, sequence information of the second synchronization signal, sequence information of the third synchronization signal, a sending periodicity of the second synchronization signal, and a sending periodicity of the third synchronization signal.

According to a thirteenth aspect, a communication device is provided. The communication device includes a processor and a memory. The memory is configured to store computer program code, and the computer program code includes computer instructions. When executing the computer instructions, the processor performs the method according to any one of the possible design manners of any one of the foregoing aspects of this application.

According to a fourteenth aspect, a signal transmission system is provided, including the sending apparatus and the receiving apparatus in any one of the foregoing aspects.

According to a fifteenth aspect, an embodiment of this application provides a chip system. The chip system is used in a communication device including a touchscreen. The chip system includes one or more interface circuits and one or more processors. The interface circuit and the processor are connected through a line. The interface circuit is configured to receive a signal from a memory of the communication device, and send the signal to the processor. The signal includes computer instructions stored in the memory. When the processor executes the computer instructions, the communication device performs the method according to any one of the foregoing aspects and the possible implementations of the foregoing aspects.

According to a sixteenth aspect, an embodiment of this application provides a computer-readable storage medium. The computer-readable storage medium includes computer instructions. When the computer instructions are run on a communication device, the communication device is enabled to perform the method according to any possible implementation of any aspect.

According to a seventeenth aspect, an embodiment of this application provides a computer program product. When the computer program product runs on a computer, the computer is enabled to perform the method according to any one of the foregoing aspects and the possible implementations of the foregoing aspects.

For technical effects of the technical solutions in the second aspect to the seventeenth aspect, refer to the technical effects of the communication method in the first aspect. Details are not described herein again.

## BRIEF DESCRIPTION OF DRAWINGS

FIG. 1A is a diagram of an OOK modulation method according to an embodiment of this application;

FIG. 1B is a diagram of an ASK modulation method according to an embodiment of this application;

FIG. 1C is a diagram of an FSK modulation method according to an embodiment of this application;

FIG. 1D is a diagram of an OFDM modulation method according to an embodiment of this application;

FIG. 1E is a diagram of an OFDM modulation method according to an embodiment of this application;

FIG. 1F is a diagram of a method for generating an OOK signal through an OFDM transmitter according to an embodiment of this application;

FIG. 1G is a diagram of a method for generating an FSK signal through an OFDM transmitter according to an embodiment of this application;

FIG. 1H is a diagram of determining synchronization information by a receive end through a correlation peak according to an embodiment of this application;

FIG. 2 is a diagram of an architecture of a communication system according to an embodiment of this application;

FIG. 3 is a diagram of a structure of a communication apparatus according to an embodiment of this application;

FIG. 4 is a schematic flowchart of a signal transmission method according to an embodiment of this application;

FIG. 5A is a diagram of a scenario in which a synchronization signal is sent on inconsecutive symbols (with short duration) according to an embodiment of this application;

FIG. 5B is a diagram of a scenario in which a first synchronization signal is sent on consecutive symbols (with short duration) according to an embodiment of this application;

FIG. 6 is a schematic flowchart of a method for obtaining a first synchronization signal through modulation according to an embodiment of this application;

FIG. 7 is a diagram of a scenario in which a correlation peak is determined based on a first synchronization signal according to an embodiment of this application;

FIG. 8 is a schematic flowchart of a signal transmission method according to an embodiment of this application;

FIG. 9A is a diagram of a second synchronization signal and a third synchronization signal according to an embodiment of this application;

FIG. 9B is a diagram of a second synchronization signal and a third synchronization signal according to an embodiment of this application;

FIG. 10 is a diagram of a second synchronization signal and a third synchronization signal according to an embodiment of this application;

FIG. 11 is a diagram of local synchronization signals 1 and 2 according to an embodiment of this application;

FIG. 12 is a diagram of a scenario in which a correlation peak is determined based on a third synchronization signal according to an embodiment of this application;

FIG. 13 is a diagram of a scenario in which a correlation peak is determined based on a second synchronization signal according to an embodiment of this application;

FIG. 14 is a diagram of a scenario in which a correlation peak is determined based on a third synchronization signal according to an embodiment of this application;

FIG. 15 is a diagram of a scenario in which a correlation peak is determined based on a second synchronization signal according to an embodiment of this application; and

FIG. 16 is a diagram of a structure of a communication apparatus according to this application.

## DESCRIPTION OF EMBODIMENTS

In the specification and accompanying drawings of this application, terms "first", "second", and the like are intended to distinguish between objects or distinguish between processing of a same object. Words such as "first" and "second" may distinguish between same items or similar items that provide basically same functions and purposes. For example, a first device and a second device are merely used to distinguish between different devices, and do not limit a sequence thereof. A person skilled in the art may understand that the terms such as "first" and "second" do not limit a quantity or an execution sequence, and the terms such as "first" and "second" do not indicate a definite difference.

"At least one" means one or more, and "a plurality of" means two or more.

The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, the terms "including", "having", or any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the word "exemplary" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

First, technical terms used in embodiments of this application are described.

1. On-off-keying (on-off-keying, OOK) modulation

In this modulation manner, based on information to be modulated, a baseband signal is generated by using an on-off non-return-to-zero line code (on-off non-return-to-zero line code), and then a carrier signal is multiplied by the baseband signal to generate an OOK signal. The OOK signal may include one or more OOK symbols in time domain.

It is assumed that the baseband signal is represented as $s_{nrz}(t)$, the carrier signal may be represented as $cos(2\pi f_c t + \phi_0)$, $\phi_0$ is an initial phase of the carrier signal, and $f_c$ is a frequency of the carrier signal. The OOK signal (which may be denoted as $s_{OOK}(t)$) generated through OOK modulation may be expressed as:

$$s_{OOK}(t) = s_{nrz}(t) * \cos(2\pi f_c t + \phi_0).$$

It is assumed that in the on-off NRZ line code, a high level represents an information bit 1, a zero level represents an information bit 0, and to-be-sent bit information is 10101. A waveform of a baseband signal corresponding to the to-be-sent bit information of a sending device may be shown in (a-1) in FIG. 1A. The baseband signal shown in (a-1) in FIG. 1Ais multiplied by a carrier signal shown in (a-2) in FIG. 1A, to obtain a sending signal (the OOK signal) shown in (a-3) in FIG. 1A. The sending device may send the sending signal shown in (a-3) in FIG. 1A to a receiving device.

It can be learned from FIG. 1A that OOK modulation may be understood as that a carrier signal is sent when bit information '1' is to be sent, and no carrier signal is sent when bit information '0' is to be sent.

After receiving the sending signal from the sending device, the receiving device may determine whether energy of bit information exceeds a threshold (for example, but not limited to 0.5). If the energy of the bit information exceeds the threshold, it is determined that the bit information is 1. If the energy of the bit information does not exceed the threshold, it is determined that the bit information is 0. This completes demodulation.

Optionally, a receiving component in an OOK receiving device usually has low complexity and low power consumption. Therefore, for some low-cost and low-power-consumption devices such as an Internet of Things device and a sensor, an OOK modulation and demodulation manner may be used, to reduce complexity and power consumption of the device.

2. Amplitude shift keying (amplitude shift keying, ASK) modulation

In an ASK modulation manner, a high level indicates an information bit 1, and a low level (non-zero) indicates an information bit 0. It is assumed that to-be-sent bit information is 10101. A waveform of a baseband signal corresponding to to-be-sent bit information of the sending device may be shown in (a-1) in FIG. 1B. The baseband signal shown in (a-1) in FIG. 1B is multiplied by a carrier signal shown in (a-2) in FIG. 1B, to obtain a sending signal (an ASK signal) shown in (a-3) in FIG. 1B. The sending device may send the ASK signal shown in (a-3) in FIG. 1B to the receiving device.

3. Frequency shift keying (frequency shift keying, FSK) modulation

In an FSK modulation manner, information is transmitted by using a frequency used for a sending signal. For example, (a-1) in FIG. 1C shows an example waveform of an FSKj signal. A waveform of the FSK signal is similar to a cosine function, but a frequency of the FSK signal changes with time. (a-1) in FIG. 1C shows a change of an instantaneous frequency of the FSK signal with time as shown in (a-2) in FIG. 1C. It can be learned that a higher frequency f1 is used for a first symbol and a third symbol, and a lower frequency f0 is used for a second symbol.

It is assumed that information bits to be transmitted are a sequence including 0 and 1. A signal whose sending frequency is $f_0$ may represent an information bit '0', and a signal whose sending frequency is $f_1$ may represent that an information bit '1' is transmitted. Therefore, a sending signal of an $n^{th}$ (n is a positive integer) FSK symbol may be represented as $s_n(t) = \cos(2\pi f_i t + \varphi_n)$ , $(n - 1) * T_{sym} \le t < n * T_{sym}$. Herein, $T_{sym}$ is duration of the FSK symbol, and $\varphi_n$ is an initial phase of the $n^{th}$ FSK symbol.

The FSK modulation technology has a strong anti-noise capability, a constant envelope, and other advantages. In addition, both costs and power consumption of an FSK receiver are low. For example, the FSK receiver may use a simple frequency discrimination circuit to detect a frequency of a received signal. If the frequency is f_0, it is determined that a corresponding information bit is 0. If the frequency is f_1, it is determined that a corresponding information bit is 1. Such a frequency discrimination circuit usually has low costs and power consumption, and is suitable for some low-rate service terminal devices, for example, an Internet of Things (IoT) device.

4. Orthogonal frequency division multiplexing (orthogonal frequency division multiplexing, OFDM) modulation

An OFDM modulation technology is another widely used modulation technology. For example, the OFDM modulation technology is used in systems such as 802.11 (Wi-Fi), 4G, and 5G. OFDM modulation is usually applied to a mobile broadband (for example, an enhanced mobile broadband (enhanced mobile broadband, eMBB)) system, and can provide a high transmission rate by using a higher communication bandwidth. For example, in most deployment scenarios, an OFDM system can provide a transmission rate of more than 1 Mbps.

In the OFDM modulation manner, a system bandwidth may be divided into a plurality of subcarriers, and data is separately modulated on each subcarrier for sending. The subcarriers may have different frequencies. An OFDM transmission and receiving procedure is shown in FIG. 1D. First, a to-be-sent data bit (for example, 10101) after modulation is mapped to a complex-valued symbol. The complex-valued symbol may be written as $ae^{j\varphi}$, $a$ is an amplitude of the symbol, and $\varphi$ is a phase of the symbol. In a possible implementation, the to-be-sent data bit is mapped to a corresponding QAM symbol (a complex-valued symbol) in a quadrature amplitude modulation (quadrature amplitude modulation, QAM) mapping manner.

Then, the sending device separately maps the QAM symbol to different subcarriers through serial-to-parallel conversion. Inverse fast Fourier transform (inverse fast Fourier transform, IFFT) is performed on the QAM symbols on the different subcarriers, to convert the QAM symbols into OFDM symbols in time domain.

In this embodiment of this application, inverse fast Fourier transform may also be referred to as inverse fast Fourier transform, or may have another name.

In a possible implementation, as shown in FIG. 1E, after obtaining the OFDM symbol, the sending device may copy a tail signal of the OFDM symbol to a front end of the OFDM symbol, and the copied signal is referred to as a cyclic prefix (cyclic prefix, CP). The cyclic prefix may be used to resist a multipath transmission delay on a radio channel.

As shown in FIG. 1D, after adding the cyclic prefix to the OFDM symbol, the sending device may perform digital to analog conversion (digital to analog conversion) and up-conversion on the OFDM symbol, to obtain an OFDM signal suitable for transmission on a radio channel, and transmit the OFDM signal through the radio channel.

After receiving the OFDM signal, the receiving device may determine bit information (for example, 10101) from the sending device through analog-to-digital conversion, serial-to-parallel conversion, cyclic prefix removal, fast Fourier transform, parallel-to-serial conversion, demodulation, and the like.

5. High-rate terminal and low-power-consumption terminal

Currently, there is a terminal using a mobile broadband (mobile broadband, MBB) service, and this type of terminal usually requires a high network speed to support a smooth data service. This type of terminal may be referred to as a high-rate terminal, or may have another name. The high-rate terminal includes but is not limited to a mobile phone, a tablet, or the like. The mobile broadband service includes but is not limited to services such as video browsing and file downloading. For the high-rate terminal, it is suitable to use a modulation manner such as OFDM to provide a high transmission rate, to support the mobile broadband service.

Some other devices in a network, such as an Internet of Things device and a wearable device (a smartwatch), usually require a low communication rate, but have a high requirement on low costs and low power consumption of a receiver. These devices may be referred to as low-power-consumption devices or other names. For the low-power-consumption device, a modulation manner like OFDM is complex. For example, a receiver needs to perform precise time-frequency synchronization and complex signal processing, and high costs and power consumption are required. Therefore, the complex modulation manner like OFDM is not applicable to the low-power-consumption device. The low-power-consumption device is more suitable for a simple modulation manner (for example, a simple modulation manner like OOK or FSK).

6. Solutions for different types of terminals

6.1 Base stations using different types of hardware

To serve different types of terminals, one method is that two sets of transmitters may be disposed on a base station of a mobile communication network. A set of transmitters of the base station is used to send an OFDM signal and serve a mobile broadband terminal (such as a mobile phone). Another set of transmitters of the base station is configured to send an OOK or FSK signal, to serve a low-rate terminal (for example, an Internet of Things device).

However, in this method, hardware of the base station needs to be upgraded, and costs are high.

6.2 Sending an OOK signal through an OFDM transmitter

In this method, the OFDM transmitter is still used as a transmitter of the base station. The OFDM transmitter may generate, on some frequency bands by performing specific signal processing, a signal that conforms to another modulation format. For example, the OFDM transmitter may generate an OOK or FSK signal in some frequency bands.

An example in which the OFDM transmitter generates the OOK signal is used. In a possible implementation, signals to be modulated on K subcarriers may be pre-determined through calculation based on a waveform of the OOK signal that is expected to be generated. After an IFFT operation is performed on the signals, a time domain waveform of an OFDM symbol is generated, and is approximated to the OOK signal to be sent.

For example, as shown in (a) in FIG. 1F, the OFDM transmitter may generate the OFDM signal using a $N_{IFFT}$ = 512 point-based IFFT operation, where $K$ = 32 subcarriers are used to generate the OOK signal.

As shown in (a) in FIG. 1F, an OOK waveform sent by the target, for example, 10100101..., that is, a waveform shown by a dashed line in (c) in FIG. 1F, is first determined. The OFDM transmitter may obtain, through a pre-operation, that information to be modulated on an allocated subcarrier is x = $[x_0, x_1, ..., x_{K-1}]$. In this way, during OFDM signal modulation, other information is modulated on other subcarriers, and x = $[x_0, x_1, ... , x_{K-1}]$ is sent on allocated 32 subcarriers. For example, (b) in FIG. 1F shows information modulated on a subcarrier. After an IFFT operation, information carried by the subcarrier is converted into a time domain signal. If middle 32 subcarriers are filtered out by using a filter, an amplitude of a signal carried in the middle 32 subcarriers is close to an amplitude of the OOK waveform sent by the target. For example, in (c) in FIG. 1F, a dashed line segment is the OOK signal sent by the target, and a solid curve is an OOK signal generated by using the foregoing method. It can be learned that, although the generated OOK signal is not a regular square wave like an ideal target signal, a high-amplitude signal may be formed in a part corresponding to bit information 1, and a low-amplitude signal may be formed in a part corresponding to bit information 0. In this way, a receive end can still correctly perform demodulation by determining a signal threshold. For example, if the energy of the bit information exceeds the threshold, it is determined that the bit information is 1. If the energy of the bit information does not exceed the threshold, it is determined that the bit information is 0. This completes demodulation.

According to the foregoing method, the OOK signal may be generated through the OFDM transmitter. In addition, it should be noted that, in this solution, a plurality of OOK symbols may be sent within duration of one OFDM symbol. For example, eight OOK symbols "ON | OFF | ON | OFF | OFF | ON | OFF | ON" are generated within duration of the one OFDM symbol. ON may correspond to the bit information 1, and OFF may correspond to the bit information 0.

6.3 Sending an FSK signal through the OFDM transmitter

For example, as shown in FIG. 1G, the OFDM transmitter generates the OFDM signal by using IFFT whose size is $N_{IFFT}$, *2K* subcarriers in IFFT are used to generate the FSK signal, and the 2K subcarriers may be divided into two subcarrier groups (a subcarrier group 0 and a subcarrier group 1). The signals to be modulated on the 2K subcarriers may be pre-determined through calculation based on a waveform of an FSK signal that is expected to be generated. After an IFFT operation is performed on the signal, a time domain waveform of an OFDM symbol is generated, and is approximated to the FSK signal to be sent.

It is assumed that an FSK signal modulation rule is as follows: If an information bit to be sent is 0, the information bit is sent on the subcarrier group 0 by using high power, and is sent on the subcarrier group 1 by using low power. If the information bit to be sent is 1, the information bit is sent on the subcarrier group 1 by using high power, and is sent on the subcarrier group 0 by using low power. In this way, the FSK signal may be considered as two parallel OOK signals respectively sent on the two subcarrier groups, and only one OOK signal is a high-power signal at the same time, and the high-power signal may be denoted as ON.

For example, an OFDM transmitter generates an OFDM signal by using $N_{IFFT}$ = 512 point FFT, 2K = 2 × 32 subcarriers are used to generate the FSK signal, and an information bit to be sent is '01011010'. In this case, the OFDM transmitter may determine that an OOK signal sent on the subcarrier group 0 is: ON (high power) | OFF (low power) | ON | OFF | OFF | ON | OFF | ON. Similarly, the OFDM transmitter may determine that an OOK signal sent on the subcarrier group 1 is "OFF | ON | OFF | ON | ON | OFF | ON | OFF". It can be learned that at a same moment, only one signal is a high-power signal 'ON'. For example, when the information bit is 0, ON is transmitted on the subcarrier group 0, and OFF is transmitted on the subcarrier group 1. Only the signal on the subcarrier group 0 is a high-power signal. When the information bit is 1, OFF is transmitted on the subcarrier group 0, ON is transmitted on the subcarrier group 1. Only the signal on the subcarrier group 1 is a high-power signal.

In this way, during OFDM signal modulation, the OFDM transmitter modulates other data on other subcarriers, sends x = $[x_0, x_1, ..., x_{K-1}]$ on the allocated subcarrier group 0, and sends y = $[y_0, y_1, ... , y_{K-1}]$ on the allocated subcarrier group 1.

According to the foregoing method, the FSK signal may be generated through the OFDM transmitter. In addition, in this solution, a plurality of FSK signals can be sent within duration of one OFDM symbol.

7. Time domain synchronization of an ASK/OOK/FSK receiver

After receiving an ASK/OOK/FSK signal, the receiving device needs to first perform time synchronization, that is, find a frame header location of each data frame from the received ASK/OOK/FSK signal, and find start time and end time of an ASK/OOK/FSK symbol. In this way, the signal can be correctly demodulated.

In a related technology, to implement time synchronization, a transmit end and a receive end may agree on a synchronization signal. The synchronization signal usually has a good autocorrelation feature. To be specific, when a sliding correlation (correlation) operation is performed on the synchronization signal and the synchronization signal, a correlation value is the largest only at a moment at which sequences are exactly aligned, and a correlation value at another moment is small.

Synchronization of the OOK signal is used as an example. The sending device may add the synchronization signal to the sent OOK signal. The synchronization signal may include one or more OOK symbols in time domain. After receiving the OOK signal, the receiving device may perform a correlation operation on the OOK signal and a locally stored synchronization signal, find a peak value of a correlation value, and determine synchronization information based on a moment at which the peak value is located.

In a possible implementation, the receiving device filters out, through a bandpass filter, a subcarrier on which the OOK signal is modulated, and after performing envelope detection on the subcarrier, correlates the synchronization signal carried on the subcarrier with the locally stored synchronization signal. In some embodiments, if the FSK modulation manner is used, the receiving device may use a plurality of bandpass filters. For example, two bandpass filters are used for 2FSK, and four bandpass filters are used for 4FSK. Different subcarriers (for example, the subcarrier group 1 and the subcarrier group 0) on which the FSK signal is modulated are separately filtered out. After envelope detection is performed on the subcarriers, the synchronization signal carried by the subcarriers is correlated with the locally stored synchronization signal. A demodulation process of each FSK signal is similar to a demodulation process of the OOK signal.

For example, (a) in FIG. 1F shows an OOK signal received by the receiving device from the sending device, and the OOK signal carries the synchronization signal (the synchronization signal is sent on an OOK symbol shown as filled with black). It is assumed that sequence information of the synchronization signal is [1 0 1 0 0 1 0 0 1 0 1 1 1 0 1 1 0 0 0 1 0 1 1 1 0 0 1 1 1 0 0 0], and a sequence length of the synchronization signal is 32 bits. The receiving device receives a $1^{st}$ modulation symbol (for example, a modulation symbol obtained after a bit 1 in a sequence is modulated) in the synchronization signal on an OOK symbol 0, receives a second modulation symbol (for example, a modulation symbol obtained after a bit 0 in the sequence is modulated) in the synchronization signal on the OOK symbol 4, and so on.

After receiving the OOK signal, the receiving device performs a correlation operation on the received OOK signal and the locally stored synchronization signal, to obtain the correlation value between the OOK signal and the local synchronization signal. The operation may be represented by using the following formula:

$$C(t) = \int_{-\infty}^{\infty} r(\tau) * g(t-\tau) d\tau$$

Herein, it is assumed that duration of the sequence is $T_0$, $r(t)$ is the OOK signal received by the receiving device, and g(t) is a local synchronization signal of the receiving device.

As shown in (a) in FIG. 1H, when the synchronization signal in the received OOK signal is not aligned with the local synchronization signal of the receiving device, a correlation result between the OOK signal and the local synchronization signal usually does not have a large correlation value. As shown in (b) in FIG. 1H, when the synchronization signal in the received OOK signal is aligned with the local synchronization signal of the receiving device, the correlation result has a large correlation value at an alignment moment. When bits in the synchronization signal are aligned, the correlation result may be considered as a triangular wave, and the triangular wave may be referred to as a correlation peak.

The receiving device may determine, based on a moment or a time period in which the correlation peak is located, an OOK symbol used to send a synchronization signal and an OOK symbol used to send data information, to determine precise synchronization time. For example, as shown in (b) in FIG. 1H, after obtaining the correlation result between the OOK signal and the local synchronization signal, the receiving device may determine, based on the moment or the time period in which a correlation peak is located, that information on OOK symbols such as OOK symbols 0 and 4 is the synchronization signal, and determine synchronization information such as a start location (for example, an OOK symbol 1) and an end location of the data information based on the synchronization information, so that the data information from the sending device can be correctly demodulated.

The example in FIG. 1H may also be considered as a process of performing correlation on synchronization signals carried in a group of subcarriers after one of a plurality of bandpass filters obtains the group of subcarriers through filtering during FSK demodulation.

8. Correlation peak width problem

According to a correlation operation mechanism, two square waves are correlated, and a waveform of an obtained correlation result may be close to a triangular wave. A bottom width of the triangular wave is twice a bottom width of the square wave. Specifically, the OOK signal is correlated with the local synchronization signal. Both the synchronization signal carried in the OOK signal and the local synchronization signal may be considered as square waves. In this case, the OOK signal is correlated with the local synchronization signal, and a time domain width of the obtain the correlation peak (which may be considered as the triangular wave) is twice duration of the OOK symbol. For example, in (b) in FIG. 1H, it is assumed that duration of one OOK symbol is $T_c$, an OOK signal $r(t)$ is correlated with a local synchronization signal $g(t)$, and an obtained correlation result $C(t)$ is a triangular wave. A bottom width of the triangular wave is $2T_c$.

Although the receiving device may still determine timing information based on the moment or the time period in which the correlation peak (triangular wave) is located, considering problems such as waveform distortion caused by noise, a component, and a channel, there is a specific probability that a time point adjacent to a peak point of the correlation peak is determined as a timing point. As a result, timing precision decreases.

To improve timing precision of the receive end, embodiments of this application provide a synchronization signal sending method. The method is applicable to a mobile communication system. The mobile communication system includes but is not limited to a 3rd generation (3rd generation, 3G) mobile communication system, a 4th generation (4th generation, 4G) mobile communication system, a 5th generation (5th generation, 5G) mobile communication system, a future evolved mobile communication system, and the like. The technical solutions in embodiments of this application may also be applied to a wireless communication system such as wireless fidelity (wireless fidelity, Wi-Fi) or Bluetooth. (a) in FIG. 2 shows a possible architecture of a communication system to which an embodiment of this application is applicable.

As shown in (a) in FIG. 2, the communication system may include a network device 100 and one or more terminal devices 200 (only one terminal device 200 is shown in (a) in FIG. 2) connected to the network device 100. Data transmission may be performed between the network device and the terminal device.

The network device 100 may be a device that can communicate with the terminal device 200. For example, the network device 100 may be a base station. The base station may be an evolved NodeB (evolved NodeB, eNB or eNodeB) in LTE, a base station in NR, a relay station or an access point, or a base station in a future network. This is not limited in this embodiment of this application. The base station in NR may also be referred to as a transmission reception point (transmission reception point, TRP) or a gNB. In the embodiments of this application, the network device may be an independent network device, for example, a base station, or may be a chip that implements a corresponding function in the network device. In this embodiment of this application, the chip system may include a chip, or may include a chip and another discrete component. In the technical solutions provided in embodiments of this application, the technical solutions provided in embodiments of this application are described by using an example in which the apparatus configured to implement the function of the network device is the network device.

The terminal device 200 in this embodiment of this application may also be referred to as a terminal, and may be a device having a wireless transceiver function. The terminal may be deployed on land, including an indoor or outdoor terminal, a handheld terminal, or a vehicle-mounted terminal, or may be deployed on a water surface (for example, on a ship) or in the air (for example, on an airplane, a balloon, and a satellite). The terminal device may be user equipment (user equipment, UE). The UE includes a handheld device, a vehicle-mounted device, a wearable device, or a computing device that has a wireless communication function. For example, the UE may be a mobile phone (mobile phone), a tablet computer, or a computer with a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. In this embodiment of this application, the terminal device may be an independent terminal, or may be a chip in the terminal. In the technical solutions provided in embodiments of this application, the technical solutions provided in embodiments of this application are described by using an example in which the apparatus configured to implement the function of the terminal is the terminal device.

Based on a capability type of the terminal, the terminal may include a high-rate terminal and a low-power-consumption terminal. Optionally, the high-rate terminal may be a terminal of a mobile broadband service, and this type of terminal includes a device such as a mobile phone or a tablet. This type of terminal usually requires a high network speed to perform a mobile broadband service, to improve service experience. Optionally, the mobile broadband service includes but is not limited to video browsing, file downloading, and the like.

A low power consumption terminal usually requires a low communication rate, but has a high requirement on low costs and power consumption of a receiver. The low power consumption terminal includes but is not limited to an Internet of Things device, a wearable device (such as a smartwatch), and the like.

(a) in FIG. 2 shows only an example of a possible example of a system architecture to which embodiments of this application are applicable. A system architecture to which embodiments of this application are applicable is not limited thereto. For example, (b) in FIG. 2 shows another system architecture. In the system, the terminals 200 may directly communicate with each other. For example, the system shown in (b) in FIG. 2 may be a sidelink system.

The network device 100 or the terminal device 200 in (a) in FIG. 2 in embodiments of this application may be implemented by one device, or may be a functional module in a device. This is not specifically limited in embodiments of this application. It may be understood that the foregoing function may be a network element in a hardware device, a software function running on dedicated hardware, a virtualized function instantiated on a platform (for example, a cloud platform), or a chip system. In this embodiment of this application, the chip system may include a chip, or may include a chip and another discrete component.

For example, an apparatus configured to implement functions of the terminal device provided in embodiments of this application or an apparatus configured to implement functions of the network device may be implemented by using an apparatus 300 in FIG. 3. FIG. 3 is a diagram of a hardware structure of the apparatus 300 according to an embodiment of this application. The apparatus 300 includes at least one processor 301, configured to implement a function of the terminal device or the network device provided in embodiments of this application. The apparatus 300 may further include a bus 302 and at least one communication interface 304. Optionally, the apparatus 300 may further include a memory 303.

In the embodiments of this application, the processor may be a central processing unit (central processing unit, CPU), a general purpose processor, a network processor (network processor, NP), a digital signal processor (digital signal processing, DSP), a microprocessor, a microcontroller, a programmable logic device (programmable logic device, PLD), or any combination thereof. The processor may alternatively be any other apparatus having a processing function, for example, a circuit, a component, or a software module.

The bus 302 may be configured to transfer information between the foregoing components.

The communication interface 304 is configured to communicate with another device or a communication network such as an Ethernet, a radio access network (radio access network, RAN), or a wireless local area network (wireless local area networks, WLAN). The communication interface 304 may be an interface, a circuit, a transceiver, or another apparatus that can implement communication. This is not limited in this application. The communication interface 304 may be coupled to the processor 301. The coupling in this embodiment of this application may be an indirect coupling or a communication connection between apparatuses, units, or modules in an electrical form, a mechanical form, or another form, and is used for information exchange between the apparatuses, the units, or the modules.

In embodiments of this application, the memory may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of instructions or a data structure and that can be accessed by a computer. However, the memory is not limited thereto. The memory may exist independently, or may be coupled to the processor, for example, by using the bus 302. The memory may alternatively be integrated with the processor.

The memory 303 is configured to store program instructions. The program instructions may be controlled and executed by the processor 301, to implement the synchronization signal transmission method provided in the following embodiments of this application. The processor 301 is configured to invoke and execute the instructions stored in the memory 303, to implement the synchronization signal transmission method provided in the following embodiments of this application.

Optionally, computer instructions in embodiments of this application may also be referred to as program code. This is not specifically limited in embodiments of this application.

Optionally, the memory 303 may be included in the processor 301.

During specific implementation, in an embodiment, the processor 301 may include one or more CPUs such as a CPU 0 and a CPU 1 in FIG. 3.

During specific implementation, in an embodiment, the apparatus 300 may include a plurality of processors, for example, the processor 301 and a processor 307 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

The apparatus 300 may be a general device or a dedicated device. During specific implementation, the apparatus 300 may be a device having a structure similar to that in FIG. 3. A type of the apparatus 300 is not limited in this embodiment of this application.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Some scenarios in embodiments of this application are described by using the scenarios in the communication system shown in (a) in FIG. 2 and (b) in FIG. 2 as examples. It should be noted that the solutions in embodiments of this application may be further applied to another mobile communication system, and a corresponding name may alternatively be replaced with a name of a corresponding function in another mobile communication system.

For ease of understanding, the following specifically describes the synchronization signal transmission method provided in embodiments of this application with reference to the accompanying drawings.

As shown in FIG. 4, an embodiment of this application provides a synchronization signal transmission method, including the following steps.

S101: A sending device generates a first signal.

Optionally, the sending device is a network device (for example, a base station) or a terminal. Correspondingly, when the sending device is a network device, a receiving device may be a network device or a terminal. When the sending device is a terminal, the receiving device may be a network device or a terminal. The technical solutions in embodiments of this application are applicable to a process of receiving and sending information between network devices, or a process of receiving and sending information between terminals, or a process of receiving and sending information between a network device and a terminal.

The first signal includes data information and a first synchronization signal, the first synchronization signal includes at least two first modulation symbols, the data information includes at least two second modulation symbols, and duration of a symbol of the at least two first modulation symbols is shorter than duration of a symbol of the at least two second modulation symbols.

For example, the first synchronization signal may be sent on symbols inconsecutive in time. For example, the sending device generates an OOK signal shown in FIG. 5A, and the OOK signal carries the first synchronization signal and the data information. Duration of an OOK symbol in the first synchronization signal is shorter than duration of an OOK symbol in data information. For example, symbols occupied by the first synchronization signal include OOK symbols 0, 4, 8, and 12, and symbols occupied by the data information include OOK symbols 1 to 3, 5 to 7, 9 to 11, and 13 to 15. Duration of each of the OOK symbols 0, 4, 8, and 12 is less than duration of each of the OOK symbols 1 to 3, 5 to 7, 9 to 11, and 13 to 15.

For example, the first synchronization signal may alternatively be sent on symbols consecutive in time. The sending device generates an OOK signal shown in FIG. 5B, and the OOK signal carries the first synchronization signal and the data information. Duration of an OOK symbol in the first synchronization signal is shorter than duration of an OOK symbol in the data information. For example, a $1^{st}$ modulation symbol (the first modulation symbol) in the first synchronization signal occupies an OOK symbol 1, a $2^{nd}$ modulation symbol (the first modulation symbol) in the first synchronization signal occupies an OOK symbol 2, and a $3^{rd}$ modulation symbol in the first synchronization signal occupies an OOK symbol 3. The rest may be deduced by analogy. The first synchronization signal may further occupy an OOK symbol 4, an OOK symbol 5, an OOK symbol 6, and the like. Modulation symbols (second modulation symbols) in the data information include consecutive OOK symbols 7 to 22. Duration of each of the OOK symbols 1 to 6 is shorter than duration of each of the OOK symbols 7 to 22.

The foregoing mainly uses an example in which duration of all modulation symbols in the first synchronization signal is the same. In some other embodiments, duration of different modulation symbols in the first synchronization signal may alternatively be different. Similarly, duration of different modulation symbols in the data information may be the same or different.

For example, the first signal is the OOK signal. FIG. 6 shows a process in which the sending device generates the first signal. As shown in FIG. 6, the sending device separately modulates the first synchronization signal and a data sequence. As shown in (a-1) in FIG. 6, the sending device uses a symbol whose time domain width is Td to represent the first synchronization signal. As shown in (a-2) in FIG. 6, the sending device multiplies the first synchronization signal by a carrier signal, to obtain a modulated first synchronization signal shown in (a-3) in FIG. 6. The modulated first synchronization signal carries information about a modulation symbol. The sending device may send the modulated first synchronization signal on a corresponding OOK symbol of a radio frame.

As shown in (b-1) in FIG. 6, the sending device modulates the data sequence by using a symbol whose time domain width is Tc, where Td is less than Tc. As shown in (b-2) in FIG. 6, the sending device multiplies the data sequence by the carrier signal, to obtain modulated data information shown in (b-3) in FIG. 6. The modulated data information carries information about at least one bit in the data sequence. The sending device may send the modulated data information on a corresponding OOK symbol of the radio frame.

In FIG. 6, an example in which the sending device generates the first signal through an OOK transmitter is used for description. In some other embodiments, the sending device may alternatively generate the OOK signal through an OFDM transmitter. A type of the transmitter that generates the first signal and a specific implementation of generating the first signal are not limited in embodiments of this application.

S102: The sending device sends the first signal to the receiving device.

Correspondingly, the receiving device receives the first signal from the sending device.

S103: The receiving device performs time synchronization based on the first synchronization signal.

Optionally, the receiving device may obtain first configuration information, and generate a local synchronization signal based on the first configuration information, where the local synchronization signal is used for time synchronization. In a possible implementation, the receiving device performs a correlation operation on the first signal and the local synchronization signal, and determines time synchronization information based on a correlation result.

The first configuration information includes at least one of the following information: indication information of first duration, sequence information of the first synchronization signal, and a sending periodicity of the first synchronization signal. The first duration is duration of the first modulation symbol (for example, an OOK symbol, an ASK symbol, or an FSK symbol) in the first synchronization signal, and the indication information of the first duration indicates duration of a symbol of at least two first modulation symbols. For example, as shown in FIG. 5A, the first configuration information may indicate duration T1 of the first modulation symbol in the first synchronization signal (occupying OOK symbols 0, 4, 8, and 12 filled with black), a sending periodicity T2 of the first synchronization signal, and sequence information [1 0 1 0 0 1 0 0 1 0 1 1 1 0 1 1 0 0 0 1 0 1 1 1 0 0 1 1 1 0 0 0] of the first synchronization signal.

Optionally, the receiving device may receive the first configuration information from the network device. Optionally, the network device may directly or indirectly indicate any one of the foregoing information. For example, a ratio of the duration of the first modulation symbol in the first synchronization signal to duration of the second modulation symbol in the data information may be indicated. For example, the duration of the first modulation symbol in the first synchronization signal is 1/8 or 1/4 of the duration of the second modulation symbol in the data information. For another example, it is directly indicated that the duration of the first modulation symbol in the first synchronization signal is x microseconds.

Alternatively, the first configuration information may be preconfigured in the receiving device. For example, the first configuration information is predefined in a protocol, and is configured in the receiving device when the receiving device is delivered from a factory.

For example, the first signal is an OOK signal. For example, as shown in FIG. 7, after receiving the OOK signal, the receiving device correlates the OOK signal with the local synchronization signal. When the first synchronization signal in the OOK signal is aligned with the local synchronization signal, the receiving device may obtain a corresponding correlation peak based on a correlation result. As shown in FIG. 7, the receiving device may determine, based on a location of the correlation peak in time domain, that OOK symbols 0, 4, and 124 are used to carry the first synchronization signal, and may determine a start location of the data information based on the OOK symbols, to demodulate the data information. In this process, because the duration of the first modulation symbol in the first synchronization signal in the OOK signal is short (which is equivalent to a narrow bottom width of a square wave), based on the foregoing correlation result principle, a width of the correlation peak obtained by correlating the OOK signal with the local synchronization signal is narrow. This helps improve timing precision of the receiving device.

In the foregoing solution, when the receiving device performs time synchronization, the width of the correlation peak used to determine the time synchronization information is affected by a time width of the OOK symbol. Therefore, the sending device performs modulation by using a shorter symbol to obtain the first synchronization signal. In this way, the sending device can send the first synchronization signal in an OOK symbol with shorter duration. In this way, when performing time domain correlation (by performing the correlation operation), the receive end can obtain the correlation peak with a narrower width, to determine timing information within a narrower time range. This helps improve timing precision.

An embodiment of this application further provides a synchronization signal transmission method. As shown in FIG. 8, the method includes the following steps.

S201: A sending device generates a second signal.

In some embodiments, the second signal includes a second synchronization signal and a third synchronization signal, the second synchronization signal includes at least two third modulation symbols, a time interval between adjacent symbols in the at least two third modulation symbols is a first time interval, the third synchronization signal includes at least two fourth modulation symbols, a time interval between adjacent symbols in the at least two fourth modulation symbols is the first time interval, there is first offset time between sending time of the second synchronization signal and sending time of the third synchronization signal, and duration of a symbol of the at least two fourth modulation symbols is shorter than duration of a symbol of the at least two third modulation symbols.

For example, as shown in FIG. 9A, an OOK signal includes the second synchronization signal, the third synchronization signal, and data information. A time interval between two adjacent third modulation symbols in the second synchronization signal (shown as filled with slashes) is T3 (the first time interval). For example, the sending device sends a 1st modulation symbol in the second synchronization signal in an OOK symbol 5 shown in FIG. 9A, sends a 2nd modulation symbol in the second synchronization signal in an OOK symbol 15, sends a 3rd modulation symbol in the second synchronization signal in an OOK symbol 25, and so on.

For example, the sending device sends a 1st modulation symbol in the third synchronization signal (shown as filled with black) in an OOK symbol 0 shown in FIG. 9A, sends a 2nd modulation symbol in the third synchronization signal in an OOK symbol 10, sends a 3rd modulation symbol in the third synchronization signal in an OOK symbol 20, and so on. It can be learned that a time interval between two adjacent fourth modulation symbols in the third synchronization signal is the first time interval T3.

For example, as shown in FIG. 9A, there is first offset time T4 between sending time of the first modulation symbol in the second synchronization signal (occupying an OOK symbol filled with slashes) and sending time of the first modulation symbol in the third synchronization signal (occupying an OOK symbol filled in black). It can be learned that there is the first offset time T4 between the sending time of the second synchronization signal and the sending time of the third synchronization signal.

For example, still as shown in FIG. 9A, duration (T1) of the fourth modulation symbol in the third synchronization signal is shorter than duration (T1') of the third modulation symbol in the second synchronization signal.

In some other embodiments, the second signal includes the second synchronization signal and the third synchronization signal. The second synchronization signal occupies, in time domain, a last first-type symbol corresponding to at least one second-type symbol, the third synchronization signal occupies, in time domain, a cyclic prefix CP corresponding to the at least one second-type symbol, and a signal in the CP is obtained by copying a signal of the last first-type symbol in the second-type symbol corresponding to the CP.

For example, as shown in FIG. 9B, the sending device generates an OOK signal through an OFDM transmitter. The transmitter generates four OOK symbols in each OFDM symbol. According to a working mechanism of the OFDM transmitter, a signal at a tail part of each OFDM symbol is copied to a head end of the OFDM symbol. For example, as shown in FIG. 9B, the transmitter copies a synchronization signal at a tail part (that is, an OOK symbol 4) of an OFDM symbol 1 to a head end of the OFDM symbol 1 (that is, a location filled in black before an OOK symbol 1 in FIG. 9B), and copies a synchronization signal at a tail part (that is, an OOK symbol 12) of an OFDM symbol 3 to a head end of the OFDM symbol 3 (that is, a location filled in black before an OOK symbol 9 in FIG. 9B).

For another example, as shown in FIG. 10, the sending device sends the third synchronization signal in CPs corresponding to OFDM symbols 1, 3, 4, and 5, and sends the second synchronization signal in a last OOK symbol corresponding to the OFDM symbols 1, 3, 4, and 5. It can be learned that the second synchronization signal occupies, in time domain, the last OOK symbol corresponding to each of at least one OFDM symbol (the OFDM symbols 1, 3, 4, and 5). The third synchronization signal occupies, in time domain, a CP corresponding to each of the at least one OFDM symbol (the CPs corresponding to the OFDM symbols 1, 3, 4, and 5).

In this way, the OOK signal (an example of the first signal) generated by the sending device carries two synchronization signals (for example, the second synchronization signal and the third synchronization signal). Sequence information carried in the two synchronization signals is the same, and corresponding bits in the two synchronization signals are transmitted on different occasions. A modulation symbol in one of the synchronization signals is transmitted in a last OOK symbol of a corresponding OFDM symbol, and a corresponding modulation symbol in the other synchronization signal is transmitted in a CP of the corresponding OFDM symbol. FIG. 9B is still used as an example. It is assumed that sequence information of the second synchronization signal is [1 0 1 0 0 1 0 0 1 0 1 1 1 0 1 1 0 0 0 1 0 1 1 1 0 0 1 1 1 0 0 0]. In an example, the sending device transmits the 1$^{st}$ modulation symbol (it is assumed that the first modulation symbol is a modulation symbol corresponding to a 1$^{st}$ bit 1 in the sequence) in the second synchronization signal in an OOK symbol 4. The OOK symbol 4 corresponds to a last part of the OFDM symbol 1. The sending device transmits the 2$^{nd}$ modulation symbol (a modulation symbol corresponding to a 2$^{nd}$ bit 0 in the sequence) in the second synchronization signal in an OOK symbol 12. The OOK symbol 12 corresponds to a last part of the OFDM symbol 3. The rest may be deduced by analogy. The sending device may transmit another modulation symbol of the second synchronization signal in a last OOK symbol of a corresponding OFDM symbol. It can be learned that symbols occupied by the second synchronization signal in time domain include the last OOK symbol of the OFDM symbol 1 and the last OOK symbol of the OFDM symbol 3.

Sequence information of the third synchronization signal is also [1 0 1 0 0 1 0 0 1 0 1 1 1 0 1 1 0 0 0 1 0 1 1 1 0 0 1 1 1 0 0 0]. In an example, the sending device may transmit a 1$^{st}$ modulation symbol (it is assumed that the first modulation symbol is a modulation symbol corresponding to a 1$^{st}$ bit 1 in the foregoing sequence) in the third synchronization signal in a CP of the OFDM symbol 1, and transmit a 2$^{nd}$ modulation symbol (it is assumed that the second modulation symbol is a modulation symbol corresponding to a 2$^{nd}$ bit 0 in the foregoing sequence) in the third synchronization signal in a CP of the OFDM symbol 3. The rest may be deduced by analogy. The sending device may copy a signal in a last OOK symbol of a corresponding OFDM symbol to a head end of the OFDM symbol, to form a CP of the OFDM symbol and transmit a corresponding modulation symbol in the third synchronization signal in the CP. It can be learned that the third synchronization signal occupies CPs of OFDM symbols such as the OFDM symbols 1 and 3 in time domain.

Optionally, duration of the OOK symbol is longer than or equal to duration of the CP. For example, the duration of the CP is $T_1$ = 2.34 μs, and the duration of the OOK symbol is $T_2$ = 8.33 μs. In this way, the sending device may copy only a synchronization bit in the last OOK symbol of the corresponding OFDM symbol to the head end of the OFDM symbol, and does not copy another bit (for example, a data bit) in another OOK symbol to the head end of the OFDM symbol. This helps the receiving device obtain an accurate synchronization signal from the CP. In addition, the shorter duration of the CP means that duration of a synchronization bit carried in the CP is short. In this way, the receiving device can obtain a narrower correlation peak, thereby helping improve timing precision.

S202: The sending device sends the second signal.

S203: The receiving device performs time synchronization based on the second signal.

In some embodiments, the receiving device obtains second configuration information, and generates a second local synchronization signal and/or a third local synchronization signal based on the second configuration information.

The receiving device may determine time synchronization information based on the second signal and the third local synchronization signal and/or the second local synchronization signal. Specifically, the receiving device may determine the time synchronization information based on the third local synchronization signal and the second signal. Alternatively, the receiving device may determine the time synchronization information based on the second local synchronization signal and the second signal. Alternatively, the receiving device may determine the time synchronization information based on the third local synchronization signal, the second local synchronization signal, and the second signal.

Optionally, the second configuration information includes at least one of the following information: the first time interval, the first offset time, the sequence information of the second synchronization signal, the sequence information of the third synchronization signal, indication information of second duration, indication information of third duration, a sending periodicity of the second synchronization signal, and a sending periodicity of the third synchronization signal.

The indication information of the second duration indicates the duration of the symbol of the at least two third modulation symbols, and the indication information of the third duration indicates the duration of the symbol the at least two fourth modulation symbols.

Optionally, the receiving device may receive the second configuration information from the network device, or predefine the second configuration information according to a protocol.

In some other embodiments, the receiving device obtains third configuration information, and generates a second local synchronization signal and/or a third local synchronization signal based on the third configuration information. The receiving device may determine time synchronization information based on the third local synchronization signal and/or the second local synchronization signal and the second signal.

Optionally, the third configuration information includes at least one of the following information: a second-type symbol occupied by the second synchronization signal, a second-type symbol occupied by the third synchronization signal, a sending time interval between adjacent modulation symbols in the second synchronization signal, a sending time interval between adjacent modulation symbols in the third synchronization signal, offset time between sending time of the second synchronization signal and sending time of the third synchronization signal, the sequence information of the second synchronization signal, the sequence information of the third synchronization signal, a sending periodicity of the second synchronization signal, and a sending periodicity of the third synchronization signal.

Optionally, the receiving device may receive the third configuration information from the network device, or predefine the third configuration information according to a protocol.

For example, as shown in FIG. 11, the receiving device generates a local synchronization signal 1 and a local synchronization signal 2. In the local synchronization signal 1, duration of each modulation symbol is T2, and T2 is duration of one OOK symbol. The local synchronization signal 1 corresponds to the second synchronization signal carried in the OOK symbol shown in FIG. 9B (or corresponds to the second synchronization signal shown in FIG. 9A). In the local synchronization signal 2, duration of each modulation symbol is T1, and T1 is duration of one CP. The local synchronization signal 2 corresponds to the third synchronization signal carried in the CP shown in FIG. 9B (or corresponds to the third synchronization signal shown in FIG. 9A). Both the local synchronization signal 1 and the local synchronization signal 2 are discrete-time synchronization signals.

As shown in FIG. 12, the receiving device may correlate the local synchronization signal 2 with a received OOK signal (including the second synchronization signal and the third synchronization signal), to obtain at least one correlation peak. When the third synchronization signal carried in the CP (with duration of T1) is aligned with the local synchronization signal 2, a width of an obtained correlation peak is 2T1 (that is, T1+T1, denoted as 2T1). When the second synchronization signal carried in the OOK symbol (for example, OOK symbols 5 and 12) is aligned with the local synchronization signal 2, a width of an obtained correlation peak is T1+T2. The receiving device may determine the synchronization information based on time of the at least one correlation peak obtained in FIG. 12, to determine a start location of the data information.

Alternatively, as shown in FIG. 13, the receiving device may correlate the local synchronization signal 1 with a received OOK signal (including the second synchronization signal and the third synchronization signal), to obtain at least one correlation peak. When the third synchronization signal carried in the CP (with duration of T1) is aligned with the local synchronization signal 1, a width of an obtained correlation peak is T1+T2. When the second synchronization signal carried in the OOK symbol (for example, an OOK symbol 5) is aligned with the local synchronization signal 1, a width of an obtained correlation peak is 2T2. The receiving device may determine the synchronization information based on time of the at least one correlation peak obtained in FIG. 13, to determine a start location of the data information.

Alternatively, as shown in FIG. 12 and FIG. 13, the receiving device may separately correlate the local synchronization signal 1 and the local synchronization signal 2 with a received OOK signal, to obtain at least one correlation peak. The receiving device may determine the synchronization information based on the time of the at least one correlation peak obtained in FIG. 12 and FIG. 13, to determine the start location of the data information. Correlation peaks obtained in FIG. 12 and FIG. 13 may be classified into three types, and widths of the three types of correlation peaks are different. A width of the first-type correlation peak is 2T1 (a correlation peak obtained when the third synchronization signal carried by the CP is aligned with the local synchronization signal 2), a width of the second-type correlation peak is T1+T2, and a width of the third-type correlation peak is 2T2. The width of the first-type correlation peak is the narrowest, and the receiving device may obtain most accurate scheduled time at time at which the first-type correlation peak is located. Widths of the second-type correlation peak and the third-type correlation peak are wider than the width of the first-type correlation peak, and corresponding signal energy is higher. This helps increase a probability that the receiving device successfully detects the second-type correlation peak and the third-type correlation peak.

In the foregoing solution, synchronization is performed by using the second synchronization signal whose modulation symbol duration is long. Because the modulation symbol duration of the second synchronization signal is long, energy of the second synchronization signal is high. In this way, a success probability of performing synchronization by the receive end can be improved. For example, in some communication scenarios in which a channel environment is poor, the receive end can also detect the second synchronization signal, and then perform time synchronization based on the second synchronization signal.

The foregoing embodiment is mainly described by using an example in which an OOK signal is transmitted. In some other embodiments, another modulation manner may be used between the transceiver devices, for example, an ASK (or FSK) modulation manner is used to transmit an ASK (or FSK) signal.

FIG. 12 and FIG. 13 are described by using an example in which duration (for example, both are T2) of OOK symbols is the same. In some other embodiments, duration of an OOK symbol used to send a synchronization signal may be different from duration of an OOK symbol used to send data information. For example, as shown in FIG. 14, duration of the OOK symbol used to send the data information is T3, duration of the OOK symbol used to send the synchronization signal is T2, and T3 is greater than T2. Optionally, T2 is greater than duration of a CP. A receiving device performs time domain correlation on a received OOK signal by using a local synchronization signal 2. In this way, the receiving device can obtain a narrower correlation peak when performing a correlation operation, thereby helping improve timing precision.

For another example, as shown in FIG. 15, duration of the OOK symbol used to send the data information is T3, duration of the OOK symbol used to send the synchronization signal is T2, and T3 is greater than T2. A receiving device performs time domain correlation on a received OOK signal by using a local synchronization signal 1.

For another example, duration of the OOK symbol used to send the data information is T3, duration of the OOK symbol used to send the synchronization signal is T2, and T3 is greater than T2. The receiving device separately performs time domain correlation on a received OOK signal by using a local synchronization signal 1 and a local synchronization signal 2.

The OOK symbol may be referred to as a first-type symbol, and the OFDM symbol may be referred to as a second-type symbol. It should be understood that the first-type symbol may further include another type of symbol, for example, but not limited to the ASK symbol or the FSK symbol. Similarly, the second-type symbol may also include another type of symbol. A specific type of the first-type symbol, a specific type of the second-type symbol, a specific type of an applicable communication system, and the like are not limited in embodiments of this application.

It should be noted that the foregoing plurality of embodiments may be combined, and a combined solution is implemented. Optionally, some operations in the procedures of the method embodiments are optionally combined, and/or a sequence of some operations is optionally changed. In addition, an execution sequence of steps of each procedure is merely an example, and does not constitute a limitation on an execution sequence of the steps. The steps may be alternatively performed in another execution sequence. It is not intended to indicate that the execution sequence is the only sequence in which these operations can be performed. A person of ordinary skill in the art may learn a plurality of manners of re-ranking the operations described in this specification. In addition, it should be noted that process details related to an embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

For example, in the foregoing system, some steps in the foregoing embodiments are performed by a first electronic device, and some steps are performed by a second electronic device or another electronic device. For example, smart shoes calculate a weight correction value, and report the weight correction value to a watch. The watch calculates body composition based on the weight correction value. For another example, the watch (or a first electronic device such as a mobile phone) calculates the weight correction value based on a calibration coefficient and a parameter measured by a pressure sensor of the smart shoes. For another example, the smart shoes calculate the weight correction value, calculate the body composition based on the weight correction value, and report the body composition to the watch.

It may be understood that, to implement the foregoing functions, the device in this embodiment of this application includes a corresponding hardware structure and/or software module for performing each function. With reference to the units and algorithm steps described in embodiments disclosed in this application, embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in embodiments of this application.

In embodiments of this application, function unit division may be performed on the electronic device based on the foregoing method examples. For example, each function unit may be obtained through division based on each corresponding function, or two or more functions may be integrated into one processing module. The integrated unit may be implemented in a form of hardware, or may be implemented in a form of a software function unit. It should be noted that, in this embodiment of this application, division into the units is an example, and is merely a logical function division. In actual implementation, there may be another division manner.

FIG. 16 is a schematic block diagram of a communication apparatus according to an embodiment of this application. The communication apparatus may be the foregoing sending device, receiving device, or another communication device. A communication apparatus 1700 may exist in a form of software, or may be a chip that can be used in a device. The communication apparatus 1700 includes a processing module 1702 and a communication module 1703. Optionally, the communication module 1703 may be further divided into a sending unit (not shown in FIG. 16) and a receiving unit (not shown in FIG. 16). The sending unit is configured to support the communication apparatus 1700 in sending information to another device. The receiving unit is configured to support the communication apparatus 1700 in receiving information from another device.

Optionally, the communication apparatus 1700 may further include a storage module 1701, configured to store program code and data of the communication apparatus 1700. The data may include but is not limited to original data, intermediate data, or the like.

If the communication apparatus 1700 is a sending device, the processing module 1702 may be configured to support the sending device in generating a first signal/a second signal, and/or another process used for the solutions described in this specification. The communication module 1703 is configured to support communication between the sending device and another device (for example, the receiving device), for example, support the sending device in performing S102 in FIG. 4.

If the communication apparatus 1700 is the receiving device, the processing module 1702 may be configured to control the receiving device to perform S103 in FIG. 4, and/or another process used for the solutions described in this specification. The communication module 1703 is configured to support communication between the receiving device and another device (for example, the foregoing sending device).

In a possible manner, the processing module 1702 may be a controller or the processor 301 and/or the processor 307 shown in FIG. 3, for example, may be a central processing unit (central processing unit, CPU), a general-purpose processor, a digital signal processor (digital signal processing, DSP), an application specific integrated circuit (application specific integrated circuit, ASIC), a field-programmable gate array (field-programmable gate array, FPGA), or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor.

In a possible manner, the communication module 1703 may be the communication interface 304 shown in FIG. 3, or may be a transceiver circuit, a transceiver, a radio frequency component, or the like.

In a possible manner, the storage module 1701 may be the memory 303 shown in FIG. 3.

An embodiment of this application further provides a communication device, including one or more processors and one or more memories. The one or more memories are coupled to the one or more processors. The one or more memories are configured to store computer program code. The computer program code includes computer instructions. When the one or more processors execute the computer instructions, the communication device is enabled to perform the foregoing related method steps to implement the signal transmission method in the foregoing embodiments.

An embodiment of this application further provides a chip system. The chip system includes a processor. The processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated chip (application specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable controller (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of the hardware in the processor and a software module.

An embodiment of this application further provides a computer-readable storage medium. The computer-readable storage medium stores computer instructions. When the computer instructions are run on an electronic device, the electronic device is enabled to perform the foregoing related method steps, to implement the signal transmission method in the foregoing embodiments.

An embodiment of this application further provides a computer program product. When the computer program product is run on a computer, the computer is enabled to perform the foregoing related steps, to implement the signal transmission method in the foregoing embodiments.

In addition, an embodiment of this application further provides an apparatus. The apparatus may be specifically a component or a module, and the apparatus may include a processor and a memory that are connected to each other. The memory is configured to store computer-executable instructions. When the apparatus runs, the processor may execute the computer-executable instructions stored in the memory, to enable the apparatus to perform the signal transmission method in the foregoing method embodiments.

The electronic device, the computer-readable storage medium, the computer program product, or the chip provided in embodiments of this application is configured to perform the corresponding method provided above. Therefore, for beneficial effects that can be achieved, refer to the beneficial effects in the corresponding method provided above. Details are not described herein again.

It may be understood that, to implement the foregoing functions, the electronic device includes a corresponding hardware and/or software module for performing each function. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that division into the modules in the embodiments is an example, and is merely logical function division. In actual implementation, there may be another division manner.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In several embodiments provided in this application, it should be understood that the disclosed method may be implemented in another manner. For example, the described terminal device embodiment is merely an example. For example, division into the modules and the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or the units may be implemented in an electronic form, a mechanical form, or another form.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for enabling a computer device (which may be a personal computer, a server, or a network device) or a processor to perform all or some of the steps of the method described in embodiments of this application. The foregoing storage medium includes any medium that can store program instructions such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

**1.** A signal transmission method, applied to a sending apparatus, and comprising:

generating a first signal, wherein the first signal comprises data information and a first synchronization signal, the first synchronization signal comprises at least two first modulation symbols, the data information comprises at least two second modulation symbols, and duration of a symbol of the at least two first modulation symbols is shorter than duration of a symbol of the at least two second modulation symbols; and
sending the first signal to a receiving apparatus.

**2.** The method according to claim 1, wherein the method further comprises:

sending first configuration information to the receiving apparatus, wherein
the first configuration information comprises at least one of the following information: indication information of first duration, sequence information of the first synchronization signal, and a sending periodicity of the first synchronization signal, wherein the indication information of the first duration indicates the duration of the symbol of the at least two first modulation symbols.

**3.** The method according to claim 1 or 2, wherein the method further comprises:

generating a second signal, wherein the second signal comprises a second synchronization signal and a third synchronization signal, the second synchronization signal comprises at least two third modulation symbols, a time interval between adjacent symbols in the at least two third modulation symbols is a first time interval, the third synchronization signal comprises at least two fourth modulation symbols, a time interval between adjacent symbols in the at least two fourth modulation symbols is the first time interval, there is first offset time between sending time of the second synchronization signal and sending time of the third synchronization signal, and duration of a symbol of the at least two fourth modulation symbols is shorter than duration of a symbol of the at least two third modulation symbols; and
sending the second signal.

**4.** The method according to claim 3, wherein the method further comprises:

sending second configuration information to the receiving apparatus, wherein
the second configuration information comprises at least one of the following information: the first time interval, the first offset time, sequence information of the second synchronization signal, sequence information of the third synchronization signal, indication information of second duration, indication information of third duration, a sending periodicity of the second synchronization signal, and a sending periodicity of the third synchronization signal; and
the indication information of the second duration indicates the duration of the symbol of the at least two third modulation symbols, and the indication information of the third duration indicates the duration of the symbol the at least two fourth modulation symbols.

**5.** The method according to claim 1 or 2, wherein the method further comprises:

generating a second signal, wherein the second signal comprises a second synchronization signal and a third synchronization signal, the second synchronization signal occupies, in time domain, a last first-type symbol corresponding to at least one second-type symbol, the third synchronization signal occupies, in time domain, a cyclic prefix CP corresponding to the at least one second-type symbol, and a signal in the CP is obtained by copying a signal of the last first-type symbol in the second-type symbol corresponding to the CP; and
sending the second signal.

**6.** The method according to claim 5, wherein duration of the first-type symbol is longer than or equal to duration of the CP.

**7.** The method according to claim 5 or 6, wherein the method further comprises:

sending third configuration information to the receiving apparatus, wherein
the third configuration information comprises at least one of the following information: a second-type symbol occupied by the second synchronization signal, a second-type symbol occupied by the third synchronization signal, a sending time interval between adjacent modulation symbols in the second synchronization signal, a sending time interval between adjacent modulation symbols in the third synchronization signal, offset time between sending time of the second synchronization signal and sending time of the third synchronization signal, sequence information of the second synchronization signal, sequence information of the third synchronization signal, a sending periodicity of the second synchronization signal, and a sending periodicity of the third synchronization signal.

**8.** The method according to any one of claims 3 to 7, wherein the generating a second signal comprises: generating the second signal through an orthogonal frequency division multiplexing OFDM transmitter.

**9.** The method according to claim 5 or 6, wherein the first-type symbol comprises at least one of the following symbols: an on-off-keying OOK symbol, an amplitude shift keying ASK symbol, and a frequency shift keying FSK symbol, and the second-type symbol comprises an OFDM symbol.

**10.** A signal transmission method, applied to a receiving apparatus, and comprising:

receiving a first signal from a sending apparatus, wherein the first signal comprises data information and a first synchronization signal, the first synchronization signal comprises at least two first modulation symbols, the data information comprises at least two second modulation symbols, and duration of a symbol of the at least two first modulation symbols is shorter than duration of a symbol of the at least two second modulation symbols; and
performing time synchronization based on the first synchronization signal.

**11.** The method according to claim 10, wherein the method further comprises:

obtaining first configuration information, wherein the first configuration information comprises at least one of the following information: indication information of first duration, sequence information of the first synchronization signal, a sending periodicity of the first synchronization signal, and the indication information of the first duration indicates the duration of the symbol of the at least two first modulation symbols; and
generating a first local synchronization signal based on the first configuration information, wherein the first local synchronization signal is used for time synchronization.

**12.** The method according to claim 11, wherein the first configuration information is preconfigured, or the first configuration information is configured by the sending apparatus.

**13.** The method according to claim 11 or 12, wherein the performing time synchronization based on the first synchronization signal comprises:
performing time synchronization based on the first local synchronization signal and the first synchronization signal.

**14.** The method according to any one of claims 10 to 13, wherein the method further comprises:

receiving a second signal, wherein the second signal comprises a second synchronization signal and a third synchronization signal, the second synchronization signal comprises at least two third modulation symbols, a time interval between adjacent symbols in the at least two third modulation symbols is a first time interval, the third synchronization signal comprises at least two fourth modulation symbols, a time interval between adjacent symbols in the at least two fourth modulation symbols is the first time interval, there is first offset time between sending time of the second synchronization signal and sending time of the third synchronization signal, and duration of a symbol of the at least two fourth modulation symbols is shorter than duration of a symbol of the at least two third modulation symbols; and
performing time synchronization based on the second synchronization signal and the third synchronization signal.

**15.** The method according to claim 14, wherein the method further comprises:

receiving second configuration information from the sending apparatus, wherein the second configuration information comprises at least one of the following information: the first time interval, the first offset time, sequence information of the second synchronization signal, sequence information of the third synchronization signal, indication information of second duration, indication information of third duration, a sending periodicity of the second synchronization signal, and a sending periodicity of the third synchronization signal; the indication information of the second duration indicates the duration of the symbol of the at least two third modulation symbols, and the indication information of the third duration indicates the duration of the symbol the at least two fourth modulation symbols; and

generating a second local synchronization signal and a third local synchronization signal based on the second configuration information.

**16.** The method according to any one of claims 10 to 13, wherein the method further comprises:

receiving a second signal, wherein the second signal comprises a second synchronization signal and a third synchronization signal, the second synchronization signal occupies, in time domain, a last first-type symbol corresponding to at least one second-type symbol, the third synchronization signal occupies, in time domain, a cyclic prefix CP corresponding to the at least one second-type symbol, and a signal in the CP is obtained by copying a signal of the last first-type symbol in the second-type symbol corresponding to the CP; and

performing time synchronization based on the second synchronization signal and the third synchronization signal.

**17.** The method according to claim 16, wherein the method further comprises:

receiving third configuration information from the sending apparatus, wherein the third configuration information comprises at least one of the following information: a second-type symbol occupied by the second synchronization signal, a second-type symbol occupied by the third synchronization signal, a sending time interval between adjacent modulation symbols in the second synchronization signal, a sending time interval between adjacent modulation symbols in the third synchronization signal, offset time between sending time of the second synchronization signal and sending time of the third synchronization signal, sequence information of the second synchronization signal, sequence information of the third synchronization signal, a sending periodicity of the second synchronization signal, and a sending periodicity of the third synchronization signal; and

generating a second local synchronization signal and a third local synchronization signal based on the third configuration information.

**18.** The method according to claim 14, wherein duration of the first-type symbol is longer than duration of the CP.

**19.** The method according to claim 15 or 17, wherein the performing time synchronization based on the second synchronization signal and the third synchronization signal comprises:

determining, based on the second local synchronization signal, the second synchronization signal, and the third synchronization signal, first scheduled time corresponding to the second synchronization signal and second scheduled time corresponding to the third synchronization signal.

**20.** The method according to claim 16 or 17, wherein the performing time synchronization based on the second synchronization signal and the third synchronization signal comprises:

determining, based on the third local synchronization signal, the second synchronization signal, and the third synchronization signal, third scheduled time corresponding to the second synchronization signal and fourth scheduled time corresponding to the third synchronization signal, wherein the third scheduled time corresponds to a first correlation peak, the fourth scheduled time corresponds to a second correlation peak, and a time domain width of the first correlation peak is greater than a time domain width of the second correlation peak.

**21.** A communication device, wherein the communication device comprises a memory and one or more processors, the memory is coupled to the processor, the memory is configured to store computer program code, the computer program code comprises computer instructions, and when the processor executes the computer instructions, the one or more processors are enabled to perform the method according to any one of claims 1 to 9, or the one or more processors are enabled to perform the method according to any one of claims 10 to 20.

**22.** A computer-readable storage medium, wherein the computer-readable storage medium stores instructions, and when the instructions are run on a communication device, the communication device is enabled to perform the method according to any one of claims 1 to 9, or the communication device is enabled to perform the method according to any one of claims 10 to 20.

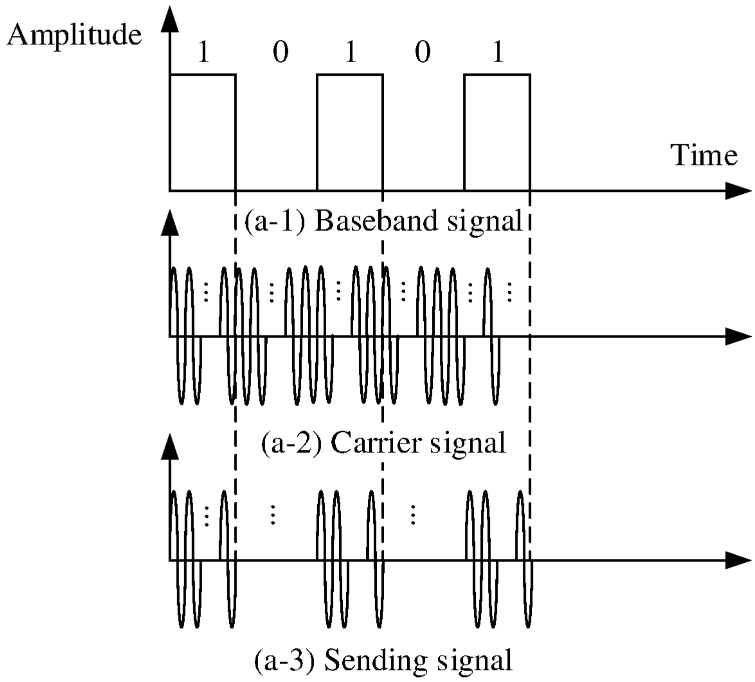
Amplitude
1
0
1
0
1
Time
(a-1) Baseband signal
(a-2) Carrier signal
(a-3) Sending signal

FIG. 1A

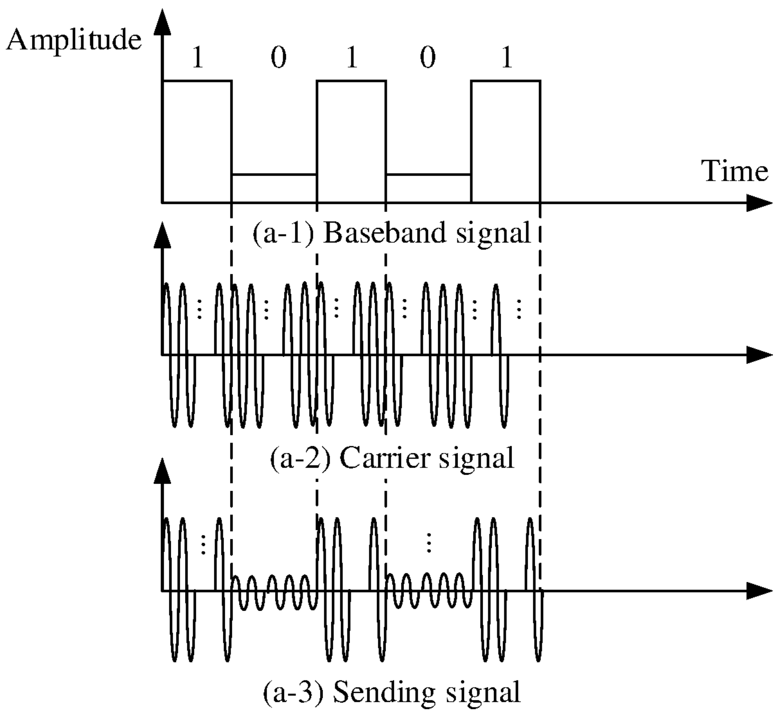
Amplitude
1
0
1
0
1
Time
(a-1) Baseband signal
(a-2) Carrier signal
(a-3) Sending signal

FIG. 1B

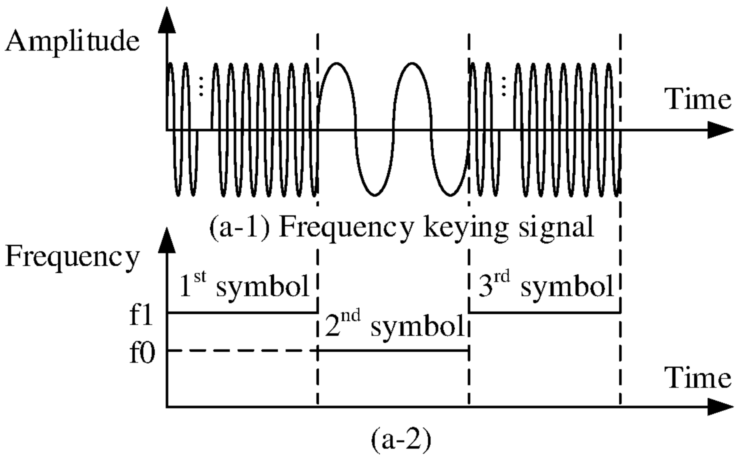
Amplitude
Time
(a-1) Frequency keying signal
Frequency
1st symbol
2nd symbol
3rd symbol
f1
f0
Time
(a-2)

FIG. 1C

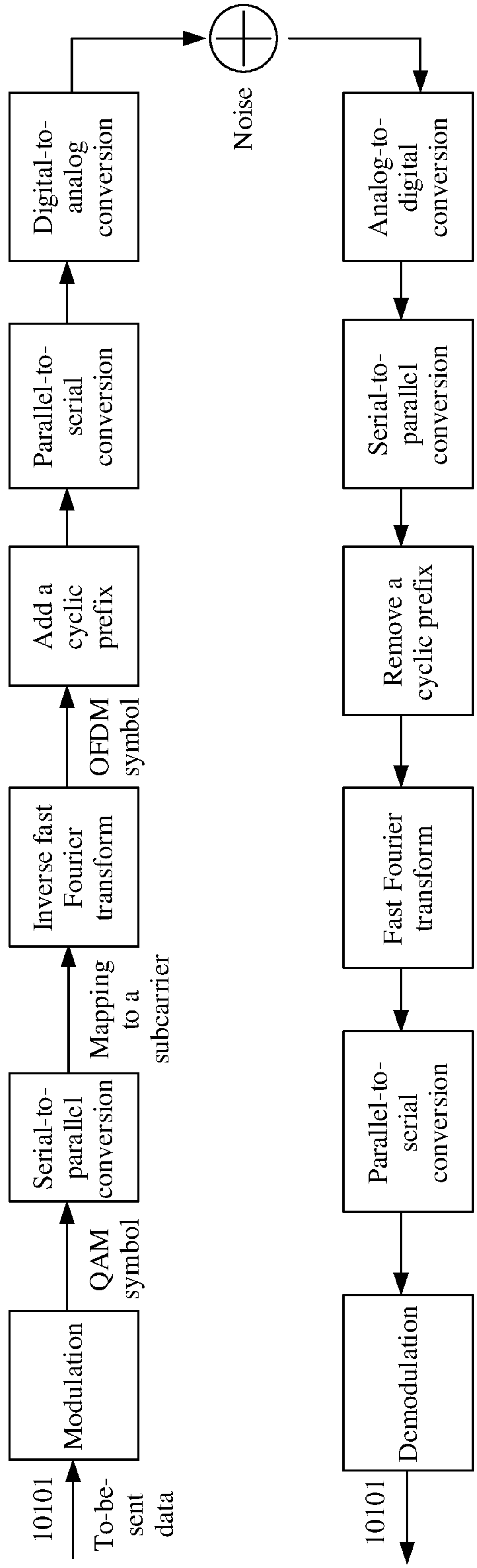


QAM Quadrature amplitude modulation

OFDM Orthogonal frequency division multiplexing modulation

FIG. 1D

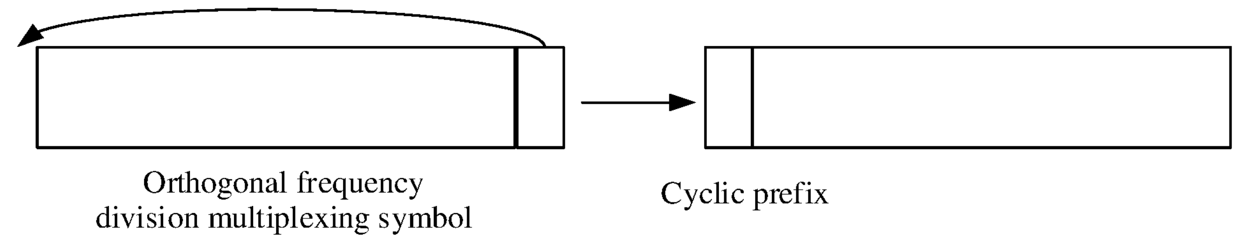
Orthogonal frequency division multiplexing symbol
Cyclic prefix

FIG. 1E

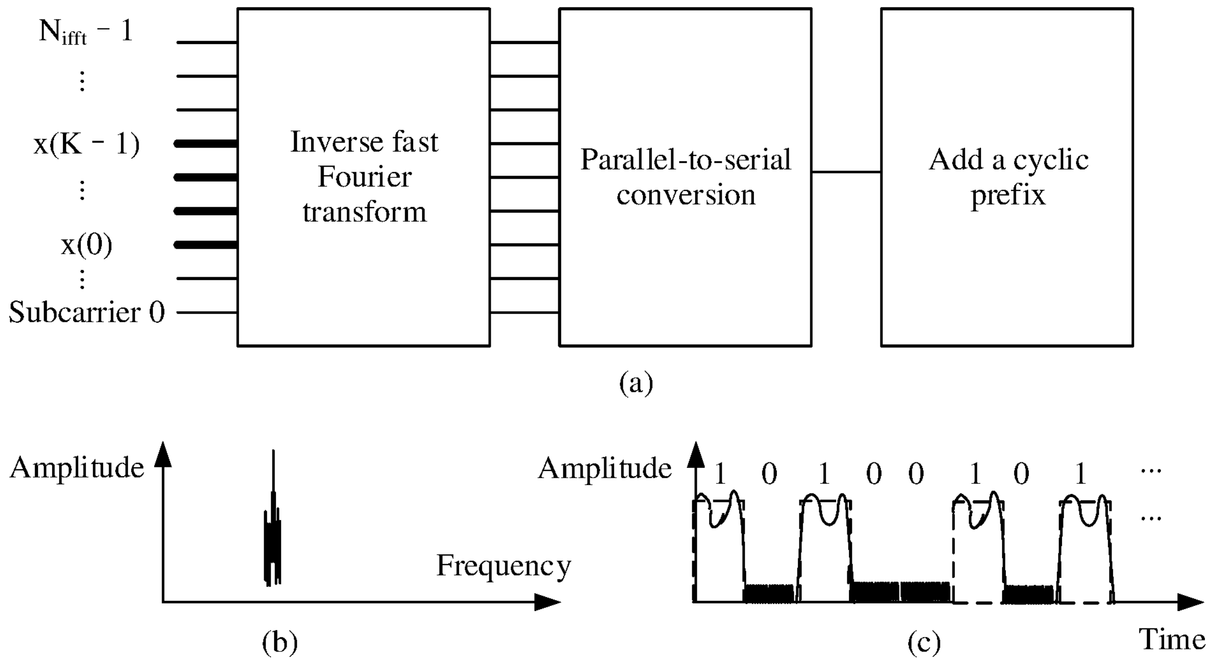
$N_{ifft}$ - 1
x(K - 1)
x(0)
Subcarrier 0
Inverse fast Fourier transform
Parallel-to-serial conversion
Add a cyclic prefix
(a)
Amplitude
Frequency
(b)
Amplitude
1 0 1 0 0 1 0 1 ...
...
Time
(c)

FIG. 1F

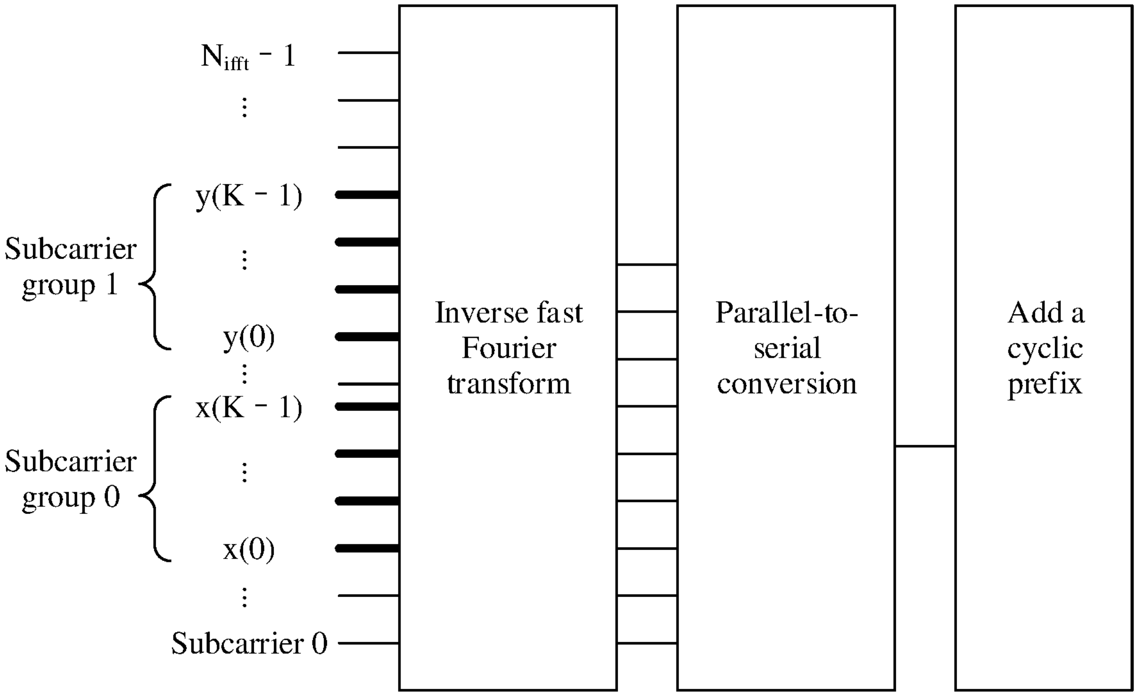

$N_{ifft}$ - 1
y(K - 1)
Subcarrier group 1
y(0)
x(K - 1)
Subcarrier group 0
x(0)
Subcarrier 0
Inverse fast Fourier transform
Parallel-to-serial conversion
Add a cyclic prefix


FIG. 1G

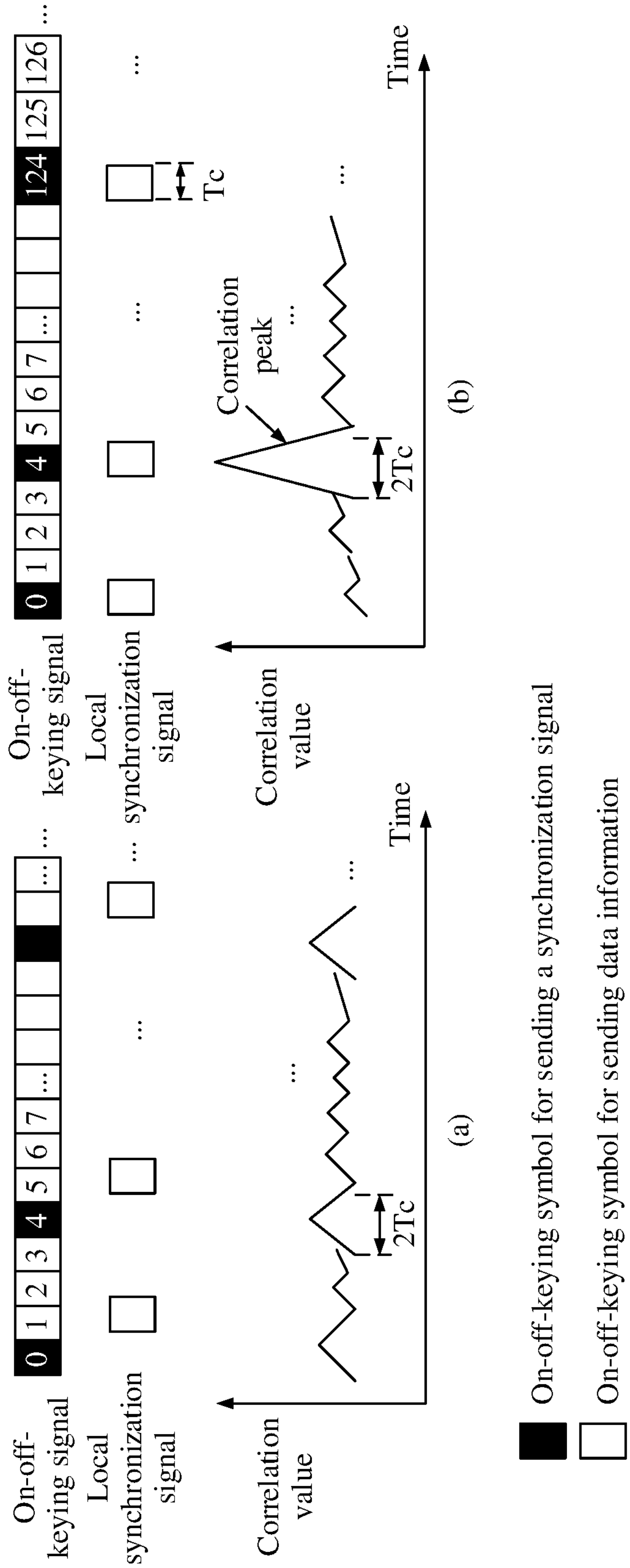
On-off-keying signal
Local synchronization signal
Correlation value
0
1
2
3
4
5
6
7
...
2Tc
Time
(a)
124
125
126
Tc
Correlation peak
(b)
On-off-keying symbol for sending a synchronization signal
On-off-keying symbol for sending data information

FIG. 1H

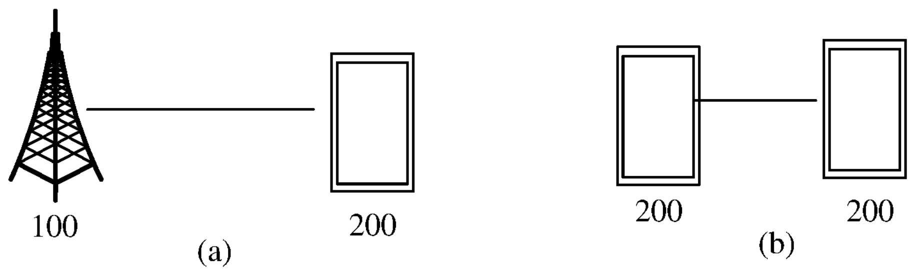
100
(a)
200
200
(b)
200

FIG. 2

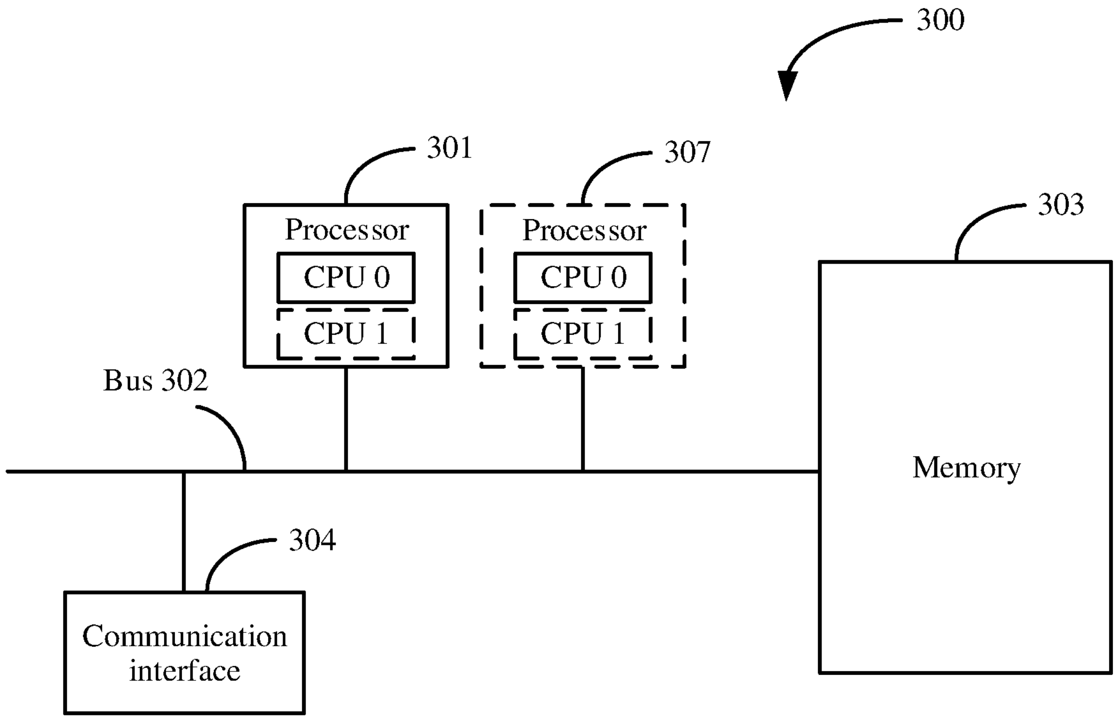
300
301
307
303
Processor
CPU 0
CPU 1
Processor
CPU 0
CPU 1
Bus 302
Memory
304
Communication interface

FIG. 3

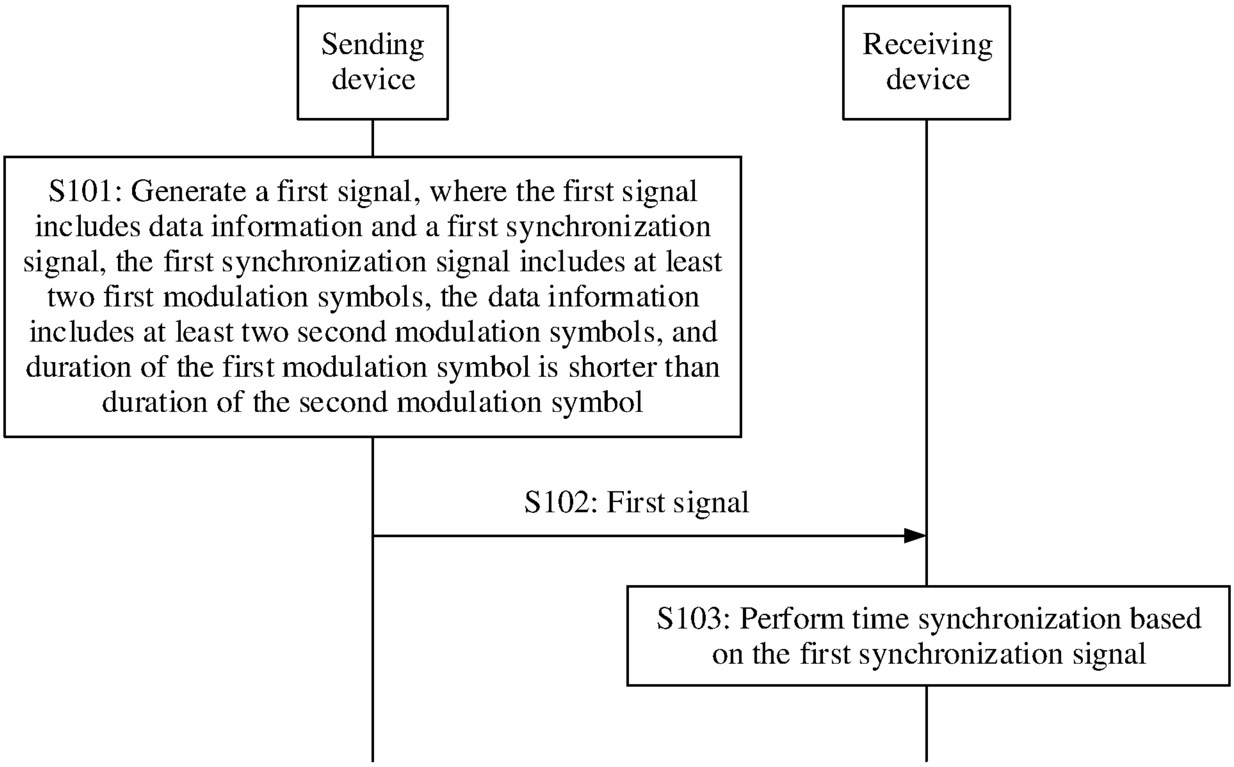
Sending device
Receiving device
S101: Generate a first signal, where the first signal includes data information and a first synchronization signal, the first synchronization signal includes at least two first modulation symbols, the data information includes at least two second modulation symbols, and duration of the first modulation symbol is shorter than duration of the second modulation symbol
S102: First signal
S103: Perform time synchronization based on the first synchronization signal

FIG. 4

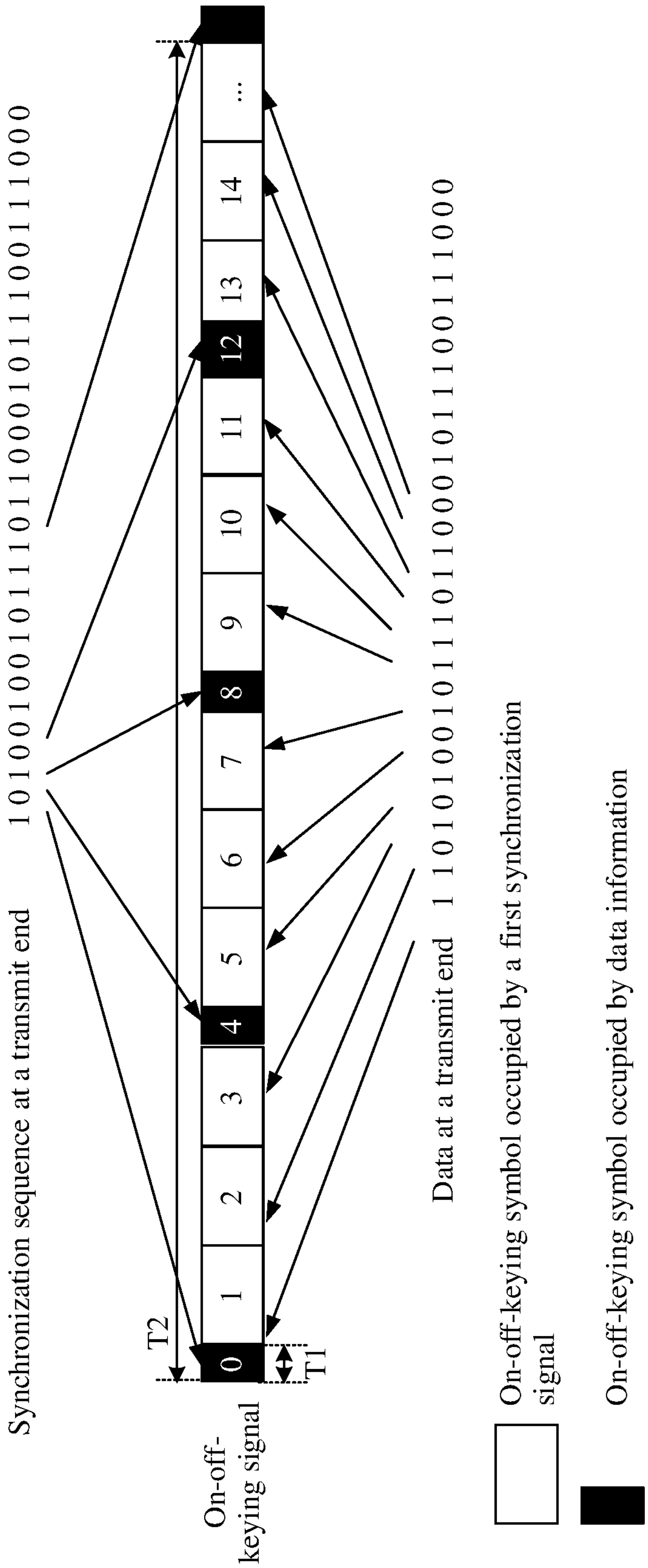

Synchronization sequence at a transmit end 1 0 1 0 0 1 0 0 1 0 1 1 1 0 1 1 0 0 0 1 0 1 1 1 0 0 1 1 1 0 0 0
T2
On-off-keying signal
0
1
2
3
4
5
6
7
8
9
10
11
12
13
14
...
T1
Data at a transmit end 1 1 0 1 0 1 0 0 1 0 1 1 1 0 1 1 0 0 0 1 0 1 1 1 0 0 1 1 1 0 0 0
On-off-keying symbol occupied by a first synchronization signal
On-off-keying symbol occupied by data information


FIG. 5A

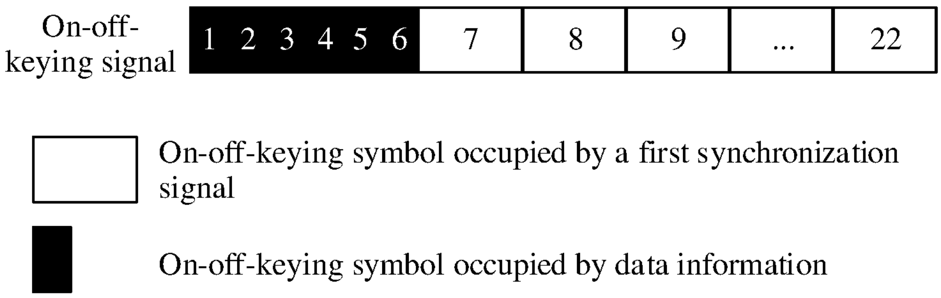
On-off-keying signal
1 2 3 4 5 6
7
8
9
...
22
On-off-keying symbol occupied by a first synchronization signal
On-off-keying symbol occupied by data information

FIG. 5B

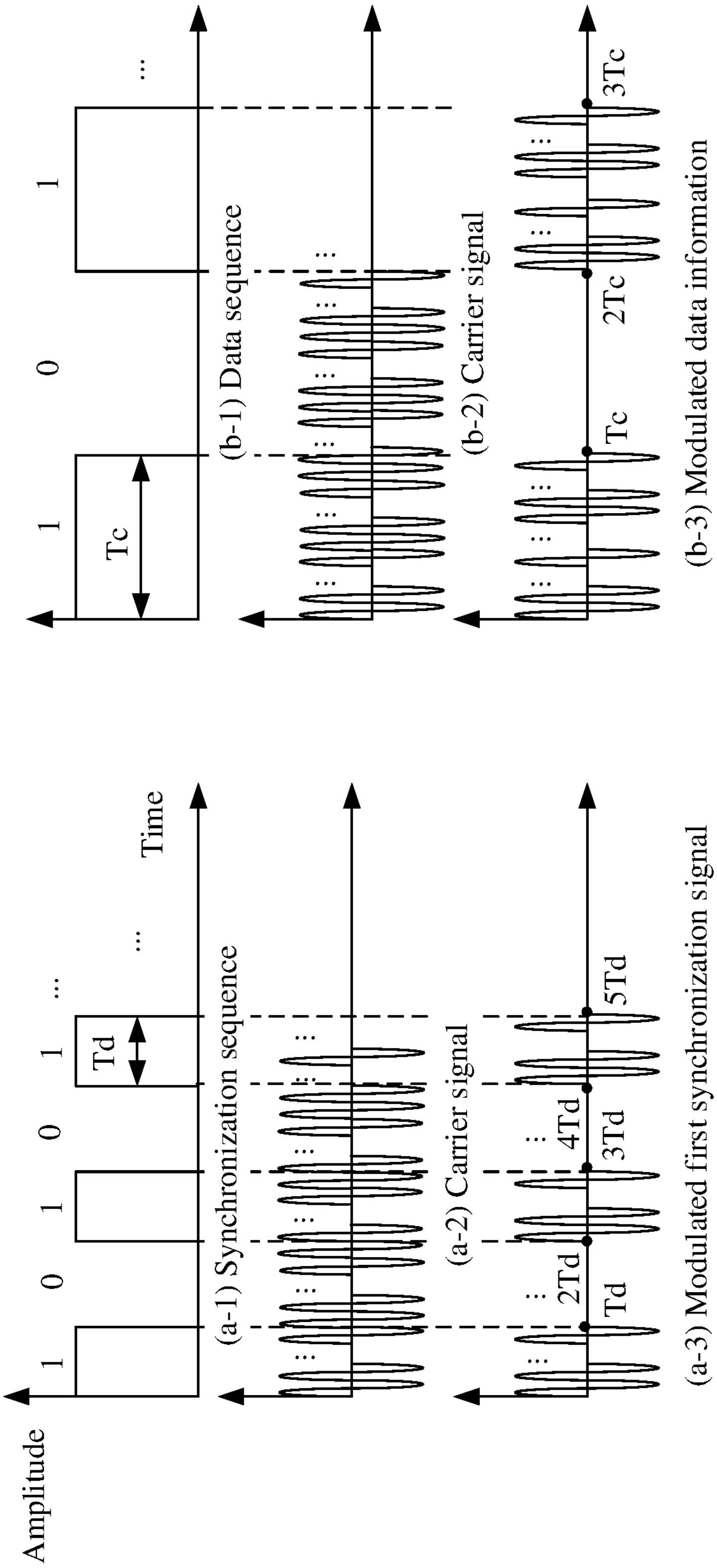
Amplitude
Time
1
0
1
0
1
Td
(a-1) Synchronization sequence
(a-2) Carrier signal
Td
2Td
3Td
4Td
5Td
(a-3) Modulated first synchronization signal
1
0
1
Tc
(b-1) Data sequence
(b-2) Carrier signal
Tc
2Tc
3Tc
(b-3) Modulated data information

FIG. 6

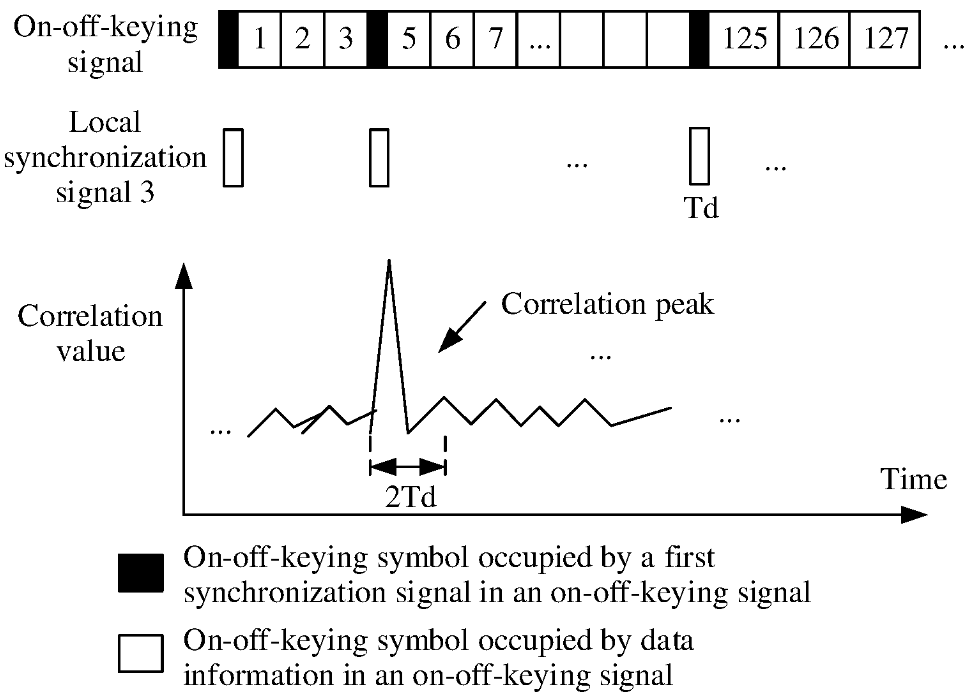
On-off-keying signal
1
2
3
5
6
7
...
125
126
127
...
Local synchronization signal 3
...
...
Td
Correlation value
Correlation peak
...
...
...
2Td
Time
On-off-keying symbol occupied by a first synchronization signal in an on-off-keying signal
On-off-keying symbol occupied by data information in an on-off-keying signal

FIG. 7

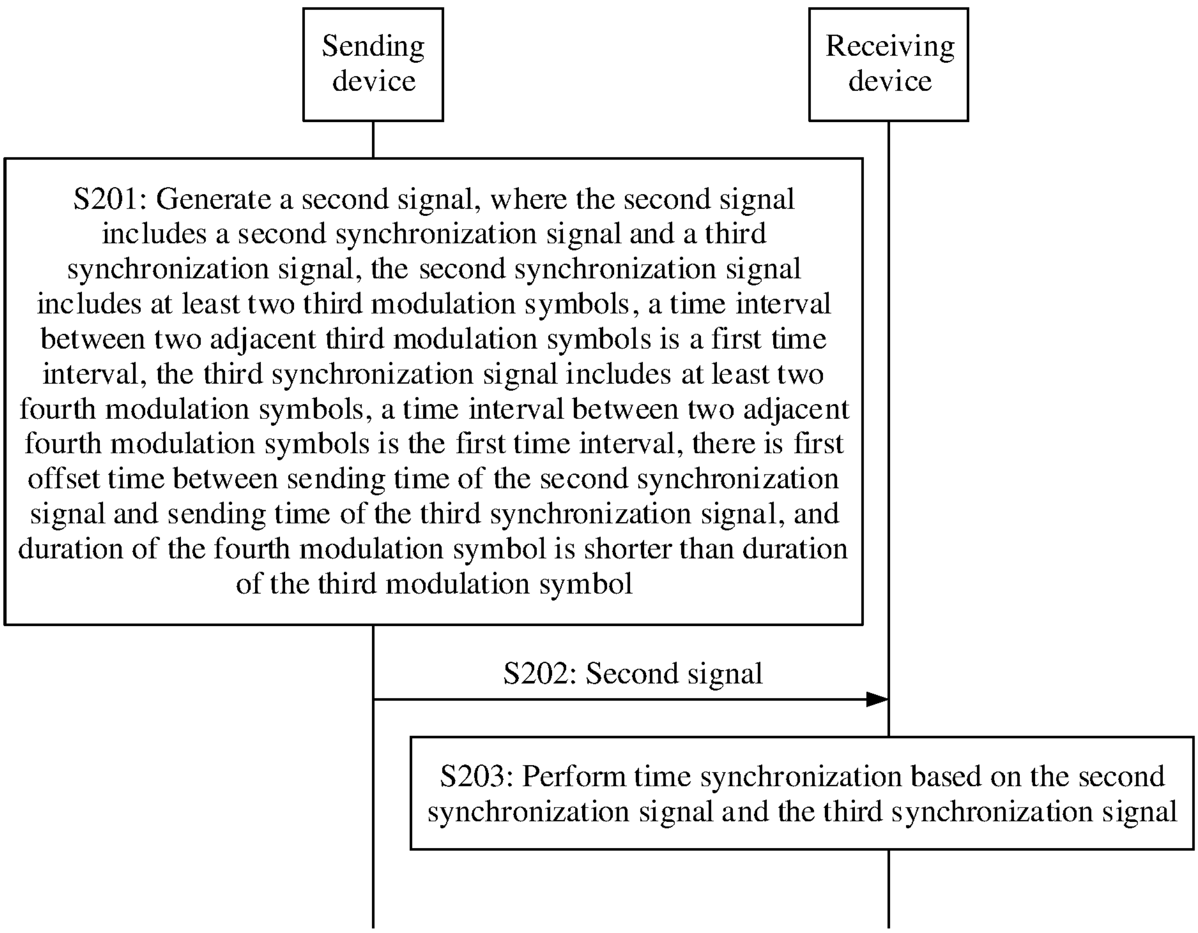
Sending device
Receiving device
S201: Generate a second signal, where the second signal includes a second synchronization signal and a third synchronization signal, the second synchronization signal includes at least two third modulation symbols, a time interval between two adjacent third modulation symbols is a first time interval, the third synchronization signal includes at least two fourth modulation symbols, a time interval between two adjacent fourth modulation symbols is the first time interval, there is first offset time between sending time of the second synchronization signal and sending time of the third synchronization signal, and duration of the fourth modulation symbol is shorter than duration of the third modulation symbol
S202: Second signal
S203: Perform time synchronization based on the second synchronization signal and the third synchronization signal

FIG. 8

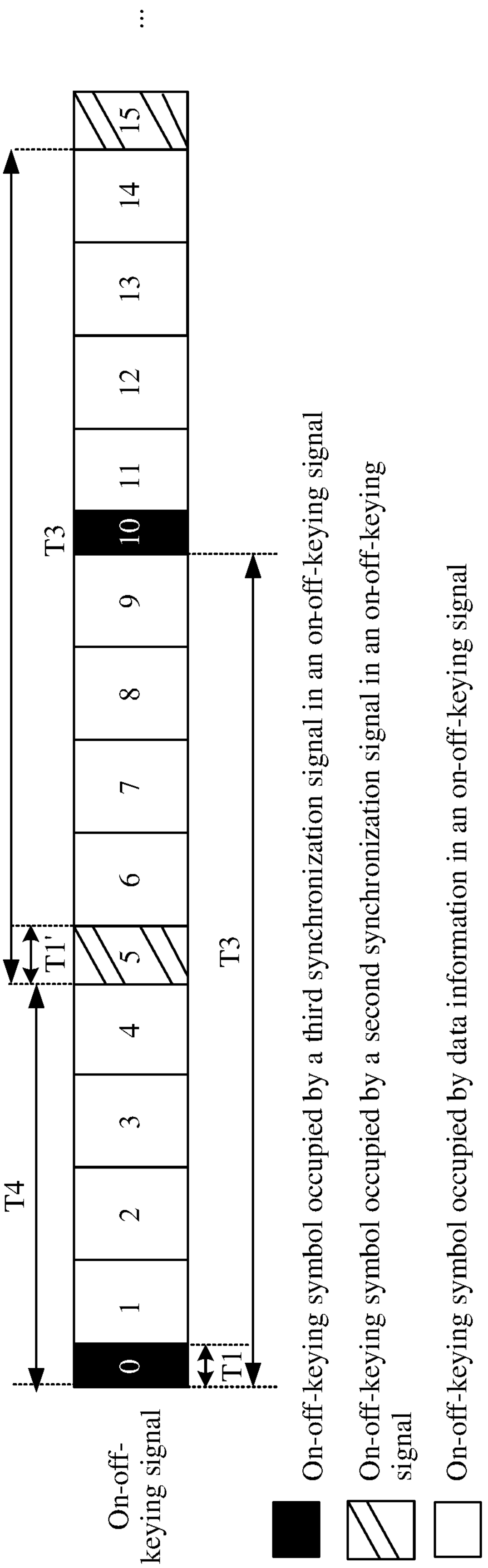
On-off-keying signal
0
1
2
3
4
5
6
7
8
9
10
11
12
13
14
15
...
T1
T1'
T3
T3
T4
On-off-keying symbol occupied by a third synchronization signal in an on-off-keying signal
On-off-keying symbol occupied by a second synchronization signal in an on-off-keying signal
On-off-keying symbol occupied by data information in an on-off-keying signal

FIG. 9A

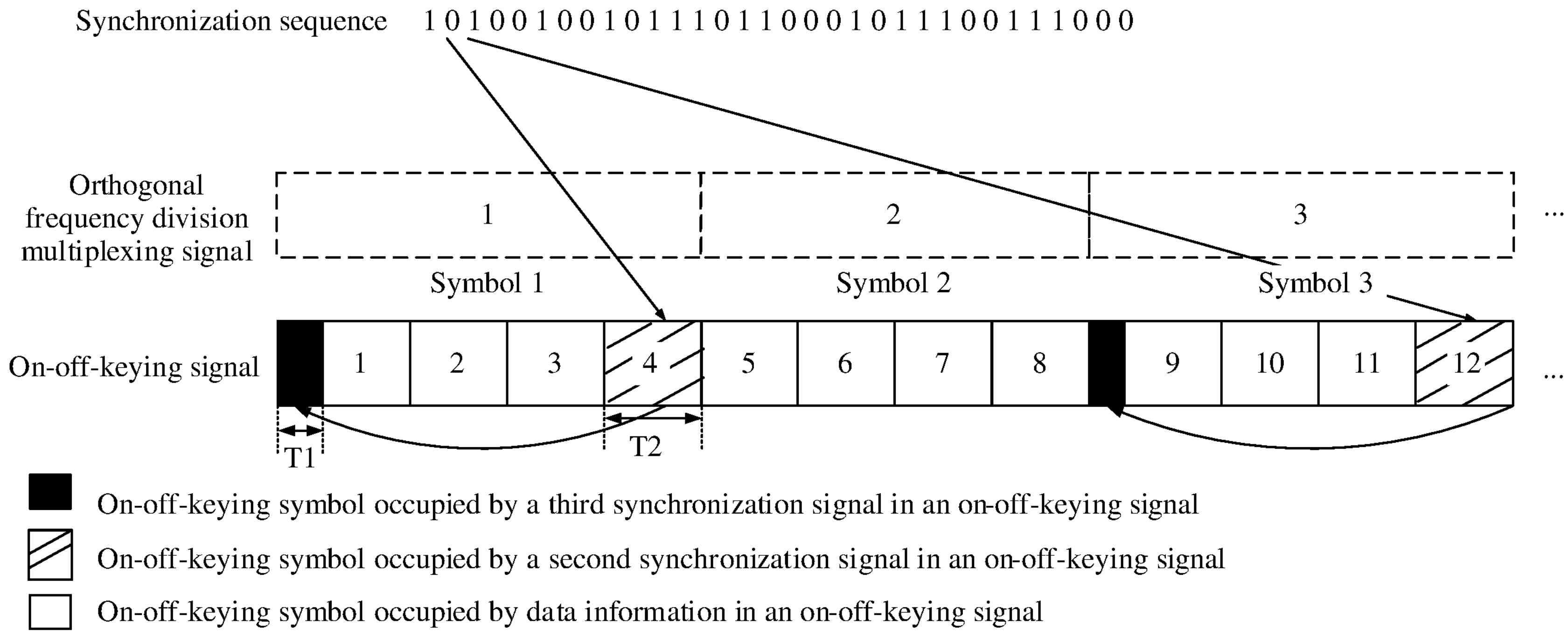

Synchronization sequence
1 0 1 0 0 1 0 0 1 0 1 1 1 0 1 1 0 0 0 1 0 1 1 1 0 0 1 1 1 0 0 0
Orthogonal frequency division multiplexing signal
1
2
3
...
Symbol 1
Symbol 2
Symbol 3
On-off-keying signal
1
2
3
4
5
6
7
8
9
10
11
12
...
T1
T2
On-off-keying symbol occupied by a third synchronization signal in an on-off-keying signal
On-off-keying symbol occupied by a second synchronization signal in an on-off-keying signal
On-off-keying symbol occupied by data information in an on-off-keying signal


FIG. 9B

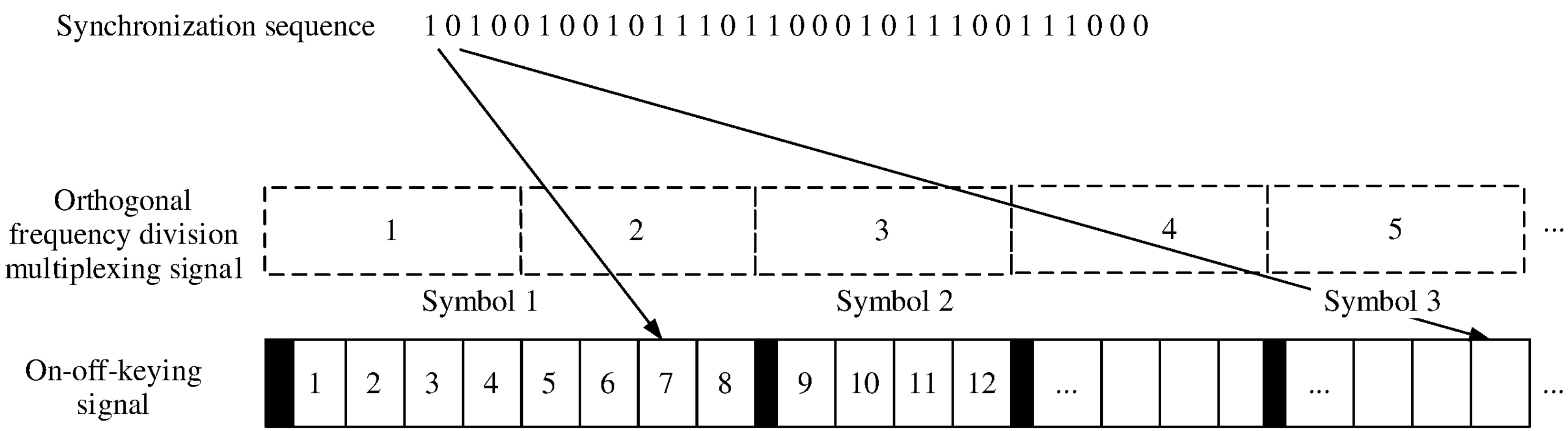
Synchronization sequence
1 0 1 0 0 1 0 0 1 0 1 1 1 0 1 1 0 0 0 1 0 1 1 1 0 0 1 1 1 0 0 0
Orthogonal frequency division multiplexing signal
1
2
3
4
5
...
Symbol 1
Symbol 2
Symbol 3
On-off-keying signal
1
2
3
4
5
6
7
8
9
10
11
12
...
...
...

FIG. 10

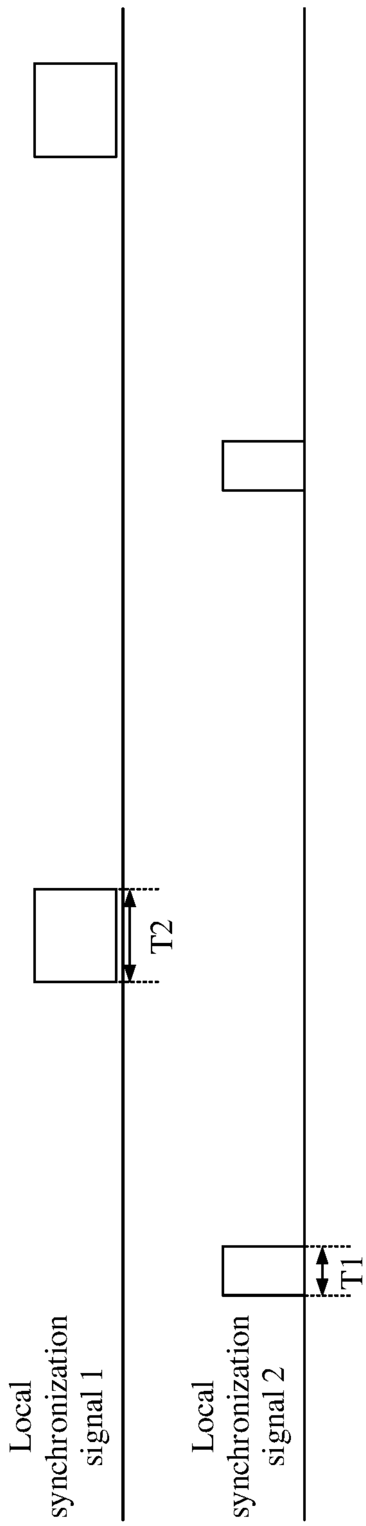
Local synchronization signal 1
Local synchronization signal 2
T2
T1

FIG. 11

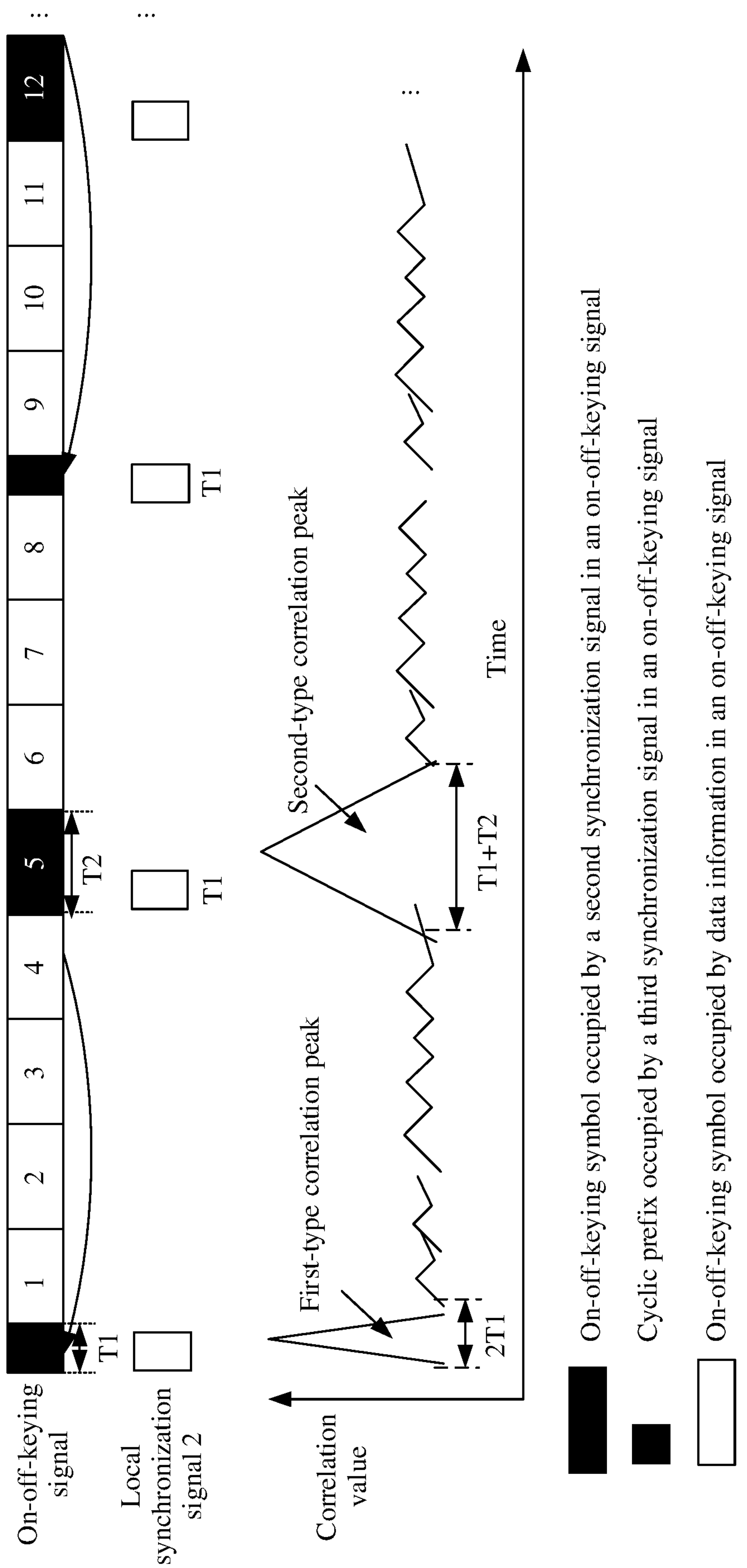
On-off-keying signal
Local synchronization signal 2
Correlation value
Time
T1
T2
T1
T1
2T1
T1+T2
First-type correlation peak
Second-type correlation peak
1
2
3
4
5
6
7
8
9
10
11
12
...
On-off-keying symbol occupied by a second synchronization signal in an on-off-keying signal
Cyclic prefix occupied by a third synchronization signal in an on-off-keying signal
On-off-keying symbol occupied by data information in an on-off-keying signal

FIG. 12

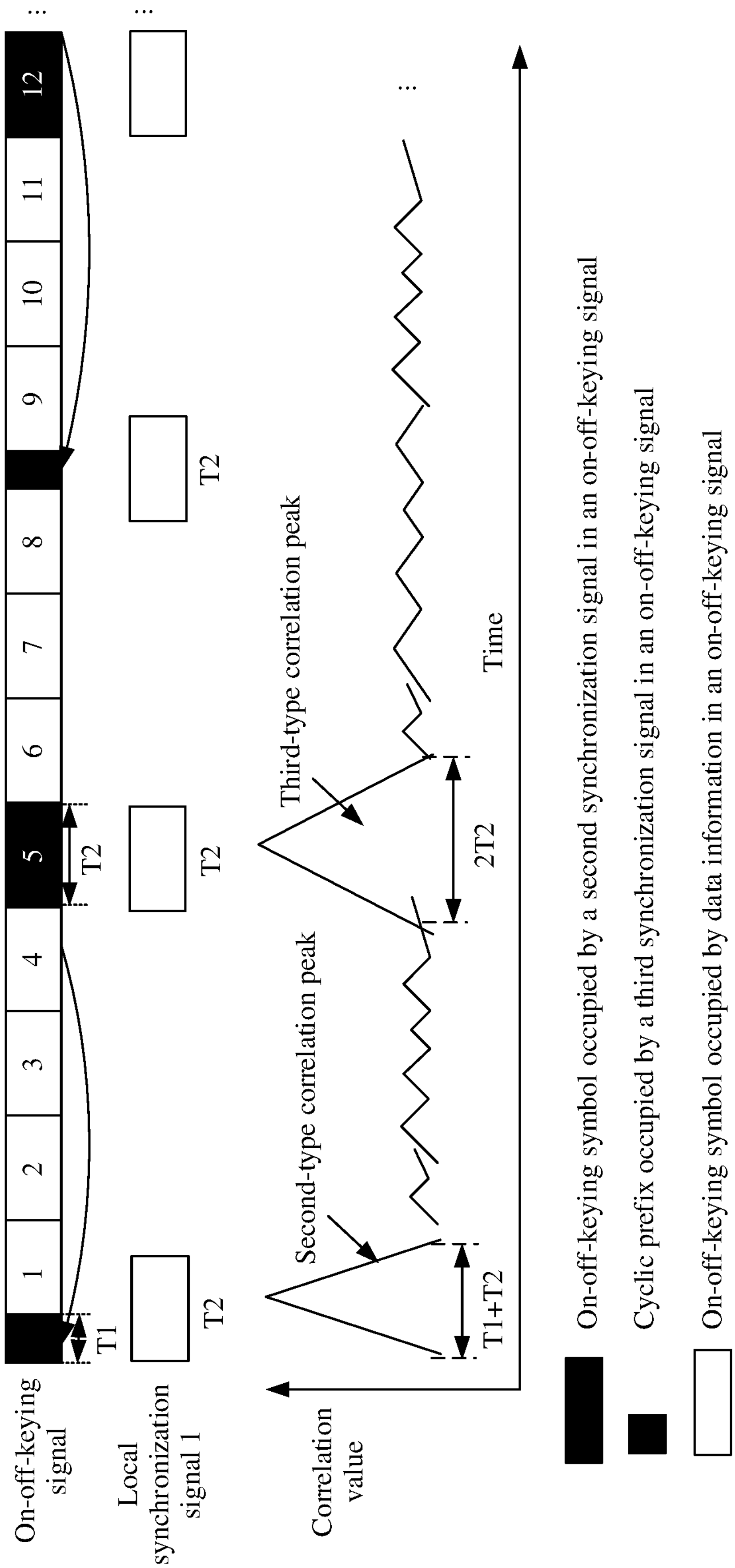
On-off-keying signal
Local synchronization signal 1
Correlation value
Time
T1
T2
T1+T2
2T2
1
2
3
4
5
6
7
8
9
10
11
12
...
Second-type correlation peak
Third-type correlation peak
On-off-keying symbol occupied by a second synchronization signal in an on-off-keying signal
Cyclic prefix occupied by a third synchronization signal in an on-off-keying signal
On-off-keying symbol occupied by data information in an on-off-keying signal

FIG. 13

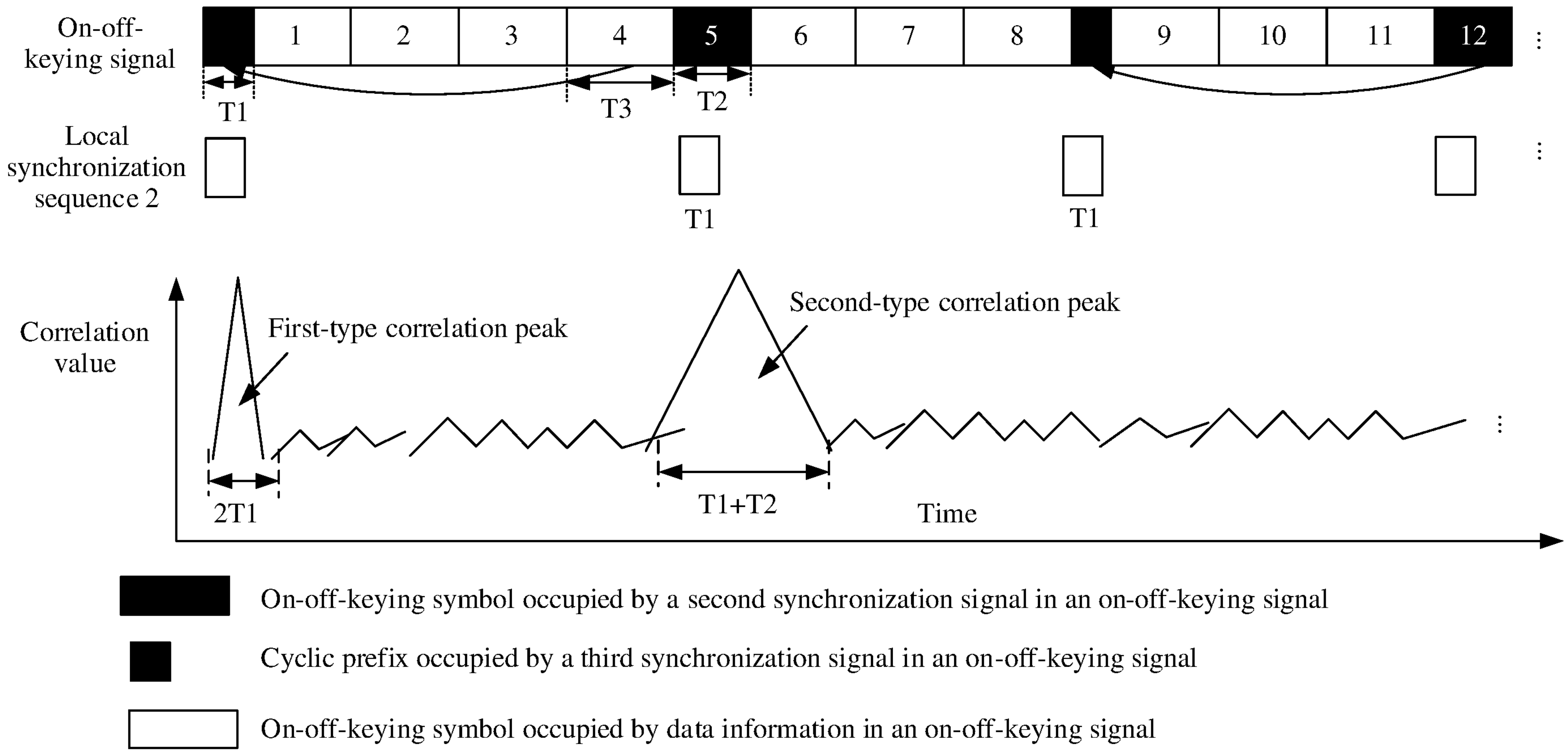
On-off-keying signal
1
2
3
4
5
6
7
8
9
10
11
12
T1
T3
T2
Local synchronization sequence 2
T1
T1
Correlation value
First-type correlation peak
Second-type correlation peak
2T1
T1+T2
Time
On-off-keying symbol occupied by a second synchronization signal in an on-off-keying signal
Cyclic prefix occupied by a third synchronization signal in an on-off-keying signal
On-off-keying symbol occupied by data information in an on-off-keying signal

FIG. 14

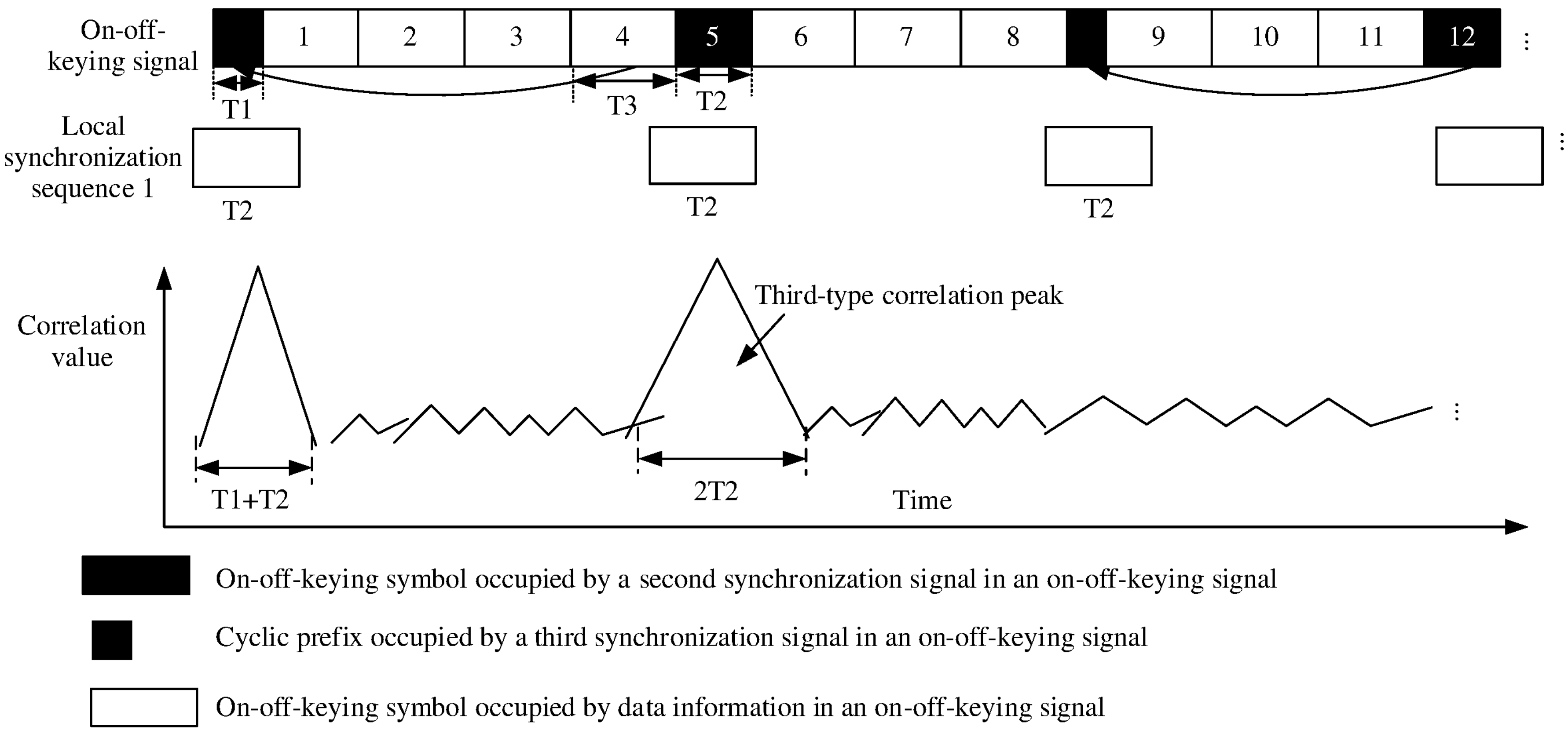
On-off-keying signal
1
2
3
4
5
6
7
8
9
10
11
12
T1
T3
T2
Local synchronization sequence 1
T2
T2
T2
Correlation value
Third-type correlation peak
T1+T2
2T2
Time
On-off-keying symbol occupied by a second synchronization signal in an on-off-keying signal
Cyclic prefix occupied by a third synchronization signal in an on-off-keying signal
On-off-keying symbol occupied by data information in an on-off-keying signal

FIG. 15

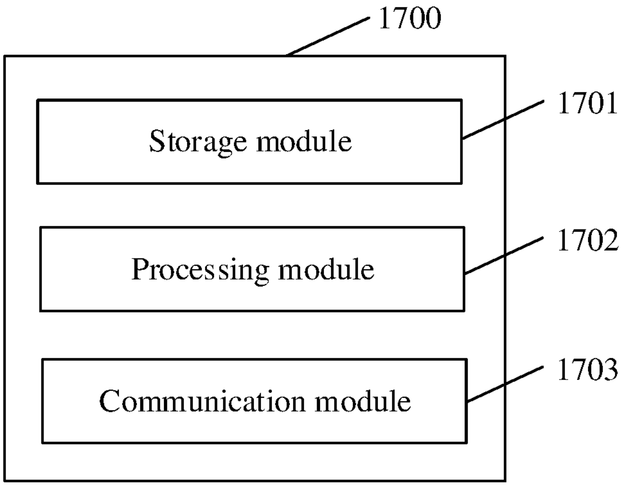
1700
Storage module
1701
Processing module
1702
Communication module
1703

FIG. 16

**INTERNATIONAL SEARCH REPORT**

International application No. **PCT/CN2023/122688**

**A. CLASSIFICATION OF SUBJECT MATTER**

H04L 27/26(2006.01)i

According to International Patent Classification (IPC) or to both national classification and IPC

**B. FIELDS SEARCHED**

Minimum documentation searched (classification system followed by classification symbols)

IPC: H04W H04L H04B

Documentation searched other than minimum documentation to the extent that such documents are included in the fields searched

Electronic data base consulted during the international search (name of data base and, where practicable, search terms used)

CNTXT, ENTXTC, VEN: 同步, 数据, 信号, 符号, 调制, 时长, 长度, 开关键控, OOK, synchronization, data, signal, symbol, modulation, length

**C. DOCUMENTS CONSIDERED TO BE RELEVANT**

| Category* | Citation of document, with indication, where appropriate, of the relevant passages | Relevant to claim No. |
|---|---|---|
| X | WO 2022111324 A1 (HUAWEI TECHNOLOGIES CO., LTD.) 02 June 2022 (2022-06-02) description, paragraphs 247-307, and figures 7-12 | 1-22 |
| A | WO 2022067703 A1 (HUAWEI TECHNOLOGIES CO., LTD.) 07 April 2022 (2022-04-07) entire document | 1-22 |
| A | CN 114785654 A (SHANGHAI JINZHUO TECHNOLOGY CO., LTD.) 22 July 2022 (2022-07-22) entire document | 1-22 |
| A | WO 2017107712 A1 (ZTE CORP.) 29 June 2017 (2017-06-29) entire document | 1-22 |
| A | WO 2022174717 A1 (HUAWEI TECHNOLOGIES CO., LTD.) 25 August 2022 (2022-08-25) entire document | 1-22 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **28 November 2023** | **06 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/122688**

| Patent document cited in search report | Publication date (day/month/year) | Patent family member(s) | Publication date (day/month/year) |
|---|---|---|---|
| WO 2022111324 A1 | 02 June 2022 | CN 114585060 A | 03 June 2022 |
| WO 2022067703 A1 | 07 April 2022 | CN 116406498 A | 07 July 2023 |
| CN 114785654 A | 22 July 2022 | None | |
| WO 2017107712 A1 | 29 June 2017 | CN 106911612 A | 30 June 2017 |
| WO 2022174717 A1 | 25 August 2022 | KR 20230144084 A | 13 October 2023 |
| | | CN 114980295 A | 30 August 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202211230510
- CN 202211537885X